# EUROPEAN PATENT SPECIFICATION

(11) **EP 2 816 341 B1**
(45) Date of publication and mention of the grant of the patent: **15.11.2023**
(21) Application number: 14173540.7
(22) Date of filing: 23.06.2014
(51) Int. Cl.: G01M 3/28, G01M 5/00, F16L 55/132, F16L 55/136, G01N 3/12

(54) **Method and assembly for pipe pressure testing**
Verfahren und Anordnung zur Rohrleitungsdruckprüfung
Procédé et ensemble pour tester la pression dans un tuyau

(30) Priority: 23.06.2013 GB 201311146
(43) Date of publication of application: 24.12.2014
(73) Proprietor: STATS (UK) Limited, Aberdeen Aberdeenshire AB11 6DN (GB)
(72) Inventor: Bowie, Angus George, Alloa FK10 2DG (GB)
(74) Representative: Marks & Clerk LLP

(56) References cited:
- WO-A2-2012/020224
- GB-A- 2 456 229
- GB-A- 2 470 954

## Description

### FIELD OF THE INVENTION

This invention relates to a method and assembly for pressure testing a pipe. In particular, but not exclusively, embodiments of the invention relate to a method and test tool assembly for pressure testing a mid-line pipe repair.

### BACKGROUND TO THE INVENTION

Transporting substances, in particular fluids, over distance is required in many industries, this typically being achieved via a system of pipes, tubes, pipe modules, pipelines and the like. In the oil and gas exploration and production industry, for example, pipelines are used in many surface, subsurface and subsea environments to transport oil and/or gas, often over large distances.

In some instances, it may be necessary to isolate a section of a pipeline for repair or replacement. One method of isolating a pipeline is with a piggable self energised mechanical isolation plug, these plugs having a taper wedge to grip the pipe bore in combination with a high integrity seal. However, there are a number of drawbacks associated with conventional isolation plugs. For example, while conventional plugs provide safe isolation for performing maintenance, the isolation provided is unidirectional and so does not provide a suitable barrier for pressure testing the repair since the test pressure would act to de-activate the isolation. One solution to this is to add a second plug of the same design, mounted in reverse to accommodate the reverse load from the test pressure. This, however, results in a serious risk of interference from the opposing plugs to the extent that deactivation and/or recovery operations may be restricted or prevented. This problem is particularly acute in applications where two plugs are deployed back to back for a mid line repair, where there is no external means of venting the test pressure. As a result, pressure testing mid line repairs can only be performed either by raising the test pressure at one end of the pipe, with the adjacent plug unset, or by adding an external penetration to the midline repair. However, the addition of mid line penetrations is not desired for pipeline integrity reasons and pressure testing up to half the pipeline will involve drying operations to be carried out, significantly adding to the time and cost of the operation.

GB 2,456,229 describes a tool adapted for location within a pipe, the tool comprising a mandrel, a first, inboard, end and a second, outboard, end. First and second pipe engaging members are coupled to the mandrel and each of the pipe engaging members is selected from one of a seal element, a lock member and a flange member. Pistons are operatively associated with the pipe engaging members and the pistons are adapted to urge the pipe engaging members into engagement with the pipe. A third pipe engaging member, e.g. a lock member, may also be provided. The pipeline tool is modular and is configured for performing a number of different pipeline functions through selection of the pipe engaging members, e.g. pipeline weld pressure testing, pipeline gripping and retrieval.

GB 2,470,954 describes a pipeline isolation plug comprising a first module with a first seal element and a first lock element, and a second module coupled to the first module, the second module having a second seal element and a third seal element spaced apart, and a second lock element, wherein fluid pressure differential across the first module serves to energise the first seal element, and fluid pressure differential across the second module serves to energise the second and third seal elements. Both plug pig modules comprise mandrels defining pressure heads, which serve to further engage the seal and clamps when energised. The volume 44 between the second and third seals may be bled / vented / evacuated. The coupling device between the two modules may be of a piston and cylinder arrangement, and may be able to measure relative axial movement, and preferably allows articulation of the plug pig.

WO 2012/020224 describes an isolation tool adapted for location in a pipe and comprising a first plug module and a second plug module. The first plug module is configurable: to grip the pipe and permit fluid bypass; to prevent fluid bypass without gripping the pipe; and to isolate the pipeline with gripping and leak tight sealing allowing a section to be fully de- pressurised. In use, the first and second plug modules are inserted into opposite ends of the pipe. The first plug module is pigged to a location in the second mode with a seal against the pipe but no grip then is configured in the fluid bypass mode when the second plug module is travelling through the pipe so that fluid displaced by the second plug module bypasses the first plug module. The second plug module and first plug module are then sealingly secured to the pipe to isolate a section of the pipe wall having a restriction.

### SUMMARY OF THE INVENTION

According to a first aspect of the present invention there is provided a method of pressure testing a pipe according to the appended claims.

According to a second aspect of the present invention there is provided a test tool assembly for pressure testing a pipe according to the appended claims.

Embodiments of the present invention thus provide a boundary facilitating the application of a test pressure in the pipe and provide a number of advantages over conventional designs. For example, since the force transmitted to the seal arrangement resulting from the test pressure is less than that required to maintain seal energisation, the test tool assembly will passively release in the event of control or activation system failure, making the assembly a fail safe condition by releasing the test pressure. This is the case even where the differential pressure is still present across the test tool assembly, in contrast to conventional isolation plugs whereby the differential pressure acts to maintain the plug in an activated configuration. By providing a boundary for application of the test pressure, the activation and operation of the test tool assembly may be carried out without disturbing an associated pressure operable tool. In the case of an associated isolation tool, for example, the capability of the test tool assembly to provide a test boundary permits the associated isolation tool to maintain full fail safe operation during the pressure test.

The test tool assembly is configured so that the area of the test tool assembly upon which the test pressure acts defines a smaller area than the seal arrangement cross sectional area. Since the area of the test tool assembly upon which the test pressure acts defines a smaller area than the seal arrangement cross sectional area, the force transmitted to the seal arrangement resulting from the test pressure is lower than the force required to maintain the seal between the seal element and the pipe, permitting passive release.

Furthermore, embodiments of the present invention may be configured so that there is no mechanical advantage or intensification of load forces from the test pressure to the pipe - as is the case in conventional isolation plugs in order to provide fail safe isolation of a worksite - such that application of the test pressure does not overstress the pipe. Beneficially, this provides the capability to apply a higher test pressure than would otherwise be possible with conventional isolation plugs while obviating or at least mitigating the risk the test pressure will overstress the pipe. For example, it is envisaged that a test pressure up to 90% of pipe yield may be applied.

The test tool assembly comprises a seal activation arrangement.

The test tool assembly is configured so that the area of the seal activation arrangement upon which the test pressure acts defines a smaller area than the seal arrangement cross sectional area. Beneficially, since the force transmitted to the seal activation arrangement resulting from the test pressure is less than that required to maintain seal energisation, the test tool assembly will passively release in the event of control or activation system failure, making the assembly a fail safe condition by releasing the test pressure. This is the case even where the differential pressure is still present across the test tool assembly, in contrast to conventional isolation plugs whereby the differential pressure acts to maintain the plug in an activated configuration.

The test tool assembly comprises a lock activation arrangement.

The seal activation arrangement is independent of the lock arrangement. The provision of independent seal and lock activation arrangements has a number of benefits. For example, the provision of independent seal and lock activation arrangements permits the assembly to be securely retained in the pipe as the seal arrangement is released, ensuring a safe release of the test pressure energy without the test tool assembly moving. Moreover, the provision of independent seal and lock activation arrangements permits the lock activation arrangement to be configured so that the test pressure acts to maintain the engagement between the lock arrangement and the pipe while the seal activation arrangement is configured such that the force acting on the seal arrangement as a result of a test pressure applied in the pipe is lower than a force required to maintain the seal between the seal arrangement and the pipe wall, thus facilitating or assisting passive release.

In use, the test tool assembly may be disposed through the pipe in a run-in configuration and operable from the run-in configuration to an activated configuration.

The test tool assembly comprises a body.

The body comprises a first body portion which forms an upstream end of the test tool assembly. The first body portion defines an annular pressure head of the test tool assembly.

The body comprises a second body portion. The second body portion extends from the first body portion. The second body portion defines a support core of the test tool assembly.

The body may comprise a third body portion. The third body portion may extend from the first body portion. The third body portion may define a cylinder. The cylinder may form part of the lock activation arrangement.

The seal arrangement is disposed on the body. The seal arrangement is disposed on the second body portion.

The seal arrangement may comprise a single seal element or a plurality of seal elements. The seal element, or in embodiments having a plurality of seal elements at least one of the seal elements, comprises a compression seal. The seal element, or in embodiments having a plurality of seal elements at least one of the seal elements, comprises an elastomeric seal. The seal element, or in embodiments having a plurality of seal elements at least one of the seal elements, may comprise an annular seal element.

The seal activation arrangement is disposed on, or at least partially formed by, the body. The seal activation arrangement is disposed on, or at least partially formed by, the second body portion.

The seal activation arrangement comprises a fluid activated seal activation arrangement. In particular embodiments, the seal activation arrangement comprises a hydraulic seal activation arrangement.

The seal activation arrangement comprises a piston. The piston is annular. The seal activation arrangement may comprise a plurality of pistons. For example, the seal activation arrangement may comprise an array of pistons mounted around the body.

The seal activation arrangement comprises a piston slidably disposed on the body. A chamber is defined between the piston and the body. The chamber may communicate with a fluid supply passage. In use, fluid supplied to the chamber urges the piston towards the seal arrangement to compress the seal arrangement into sealing engagement with the pipe.

The lock arrangement is disposed on, or at least partially formed by, the body.

The lock arrangement is disposed on, or at least partially formed by, the second body portion.

The lock arrangement comprises a taper lock. The lock arrangement comprises a lock bowl. The lock bowl is fixedly secured to the body, for example to the second body portion. The lock bowl defines an abutment shoulder for the seal element in use. The lock arrangement comprises one or more lock segments.
The lock segments are disposed around the lock bowl. The lock segments are configured to engage the pipe wall in use. The lock bowl and the lock segments each have cooperating tapered surfaces arranged so that axial movement of the lock bowl urges the lock segments into engagement with the pipe.

The lock activation arrangement may be disposed on, or at least partially formed by, the body.

The lock activation arrangement may be disposed on, or at least partially formed by, the third body portion.

The lock activation arrangement may be of any suitable form and construction.

The lock arrangement may be configured to limit the transfer of force from the test pressure to the pipe. For example, the lock arrangement may be configured to reduce the proportion of the test pressure load transmitted to the pipe. In particular embodiments, the taper angle of the lock arrangement may be configured to reduce the proportion of the test pressure transmitted to the pipe. The lock arrangement may be configured with a high taper angle. Alternatively or additionally, the lock arrangement may be configured so that the contact area between the lock and the pipe reduces the proportion of the test pressure transmitted to the pipe, a larger contact area decreasing the load applied to the pipe.

The lock activation arrangement may comprise a lock actuating piston. The lock actuating piston may be slidably mounted within the lock activation cylinder.

The lock activation arrangement may comprise a first piston chamber. The lock activation arrangement may comprise a second piston chamber.

The first piston chamber may communicate with a fluid supply passage. A piston rod may extend from the actuating piston.

The lock activation arrangement may comprise an annular compression flange.

The compression flange may comprise a substantially guide surface which in use guides the lock arrangement substantially radially to engage the pipe wall.

In use, the test tool assembly may be set by sequentially activating the lock arrangement and then the seal arrangement. The lock arrangement may be set by the application of hydraulic pressure in the first piston chamber, urging the body towards a retracted configuration. The seal arrangement may be set by the application of hydraulic pressure in the chamber, urging the seal activating piston to compress and radially expand the seal element into sealing engagement with the pipe wall.

The test tool assembly may be configured so that the lock moves in a substantially radial direction when engaging and disengaging from the pipe.

For example, a taper angle of the lock may define a relatively large or steep angle, such that the taper lock segments are urged in a substantially radial direction when engaging and disengaging from the pipe. This assists in the passive release of the test tool assembly from the pipe.

The test tool assembly may be used independently or may beneficially be operatively associated with an isolation tool assembly.

The isolation tool assembly may be of any suitable form and construction.

The isolation tool assembly may comprise a seal arrangement configured to isolate a section of the pipe.

In use, the isolation tool may be disposed in the pipe and activated to isolate an upstream pipe section from a downstream pipe section.

The isolation tool assembly may comprise a seal assembly. The isolation tool seal assembly may be of any suitable form and construction. The seal arrangement may comprise a single seal element or a plurality of seal elements.

In particular embodiments, the seal assembly may comprise a dual seal arrangement. The seal assembly may comprise a primary seal element and a secondary seal element.

The primary seal element and the secondary seal element may be independent. The primary seal element and the secondary seal element may be configured to provide two independent seal barriers, each maintained by differential pressure acting across them. The differential pressure may be provided by hydraulic actuation and by the isolated pressure. Beneficially, the ability to maintain a low pressure immediately behind the isolation tool assembly, as provided by the test tool assembly, maintains fail safe isolation.

The isolation tool assembly may comprise a single module. Alternatively, the isolation tool assembly may comprise a plurality of modules.

The isolation tool assembly may further comprise a lock assembly.

The lock arrangement may comprise a taper lock.

The test tool assembly may be configured so that the first body portion is static as the seal arrangement is set. Embodiments of the invention thus provide the further benefit that the activation of the test tool assembly does not disturb the primary isolation provided by the isolation tool assembly, since the isolated section of the pipe between the isolation tool assembly and the test tool assembly is not compressed when the test tool assembly is activated. Further, this invention can be safely combined with a pressure energised mechanical plug system without invalidating the original isolation. This contrasts with a conventional isolation plug in which the pressure head moves towards the lock, resulting in a significant rise in pressure in the trapped volume which may, in some cases, be sufficient to disturb the primary isolation.

The test tool assembly may comprise a bypass arrangement for bypassing the isolation tool assembly. In use, the bypass arrangement may permit fluid bypass of at least one of the test tool assembly and/or the isolation tool assembly.

The bypass arrangement may comprise a first control module.

The first control module may be disposed upstream of the isolation tool assembly, that is in the isolated pipe section in use.

The first control module may be configured to communicate with an annulus between the seal elements of the isolation tool assembly.

The first control module may be configured to communicate with the upstream pipe section.

A port may be provided in the test tool assembly, for example the first body portion of the test tool assembly, the port permitting communication between the annulus and the first control module.

A valve may be associated with the first control module, the valve operable to isolate the annulus. The valve may define an annulus vent valve of the test tool assembly. In use, when the test tool assembly is set, and when permitted to do so by the valve, fluid in the annulus will vent into the upstream pipe section.

The bypass arrangement may comprise a second control module. In particular embodiments, the second control module is fully independent of the first control module. The second control module may be disposed downstream of the test tool assembly.

The second control module may be configured to communicate with the annulus between the seal elements of the isolation tool assembly.

The second control module may be configured to communicate with the downstream pipe section.

A port may be provided in the isolation tool assembly, for example the first body portion of the isolation tool assembly, the port permitting communication between the annulus and the second control module.

A control valve may be associated with the second control module, the control valve operable to permit pipeline pressure from the downstream pipe section into the annulus. The control valve may define a pressure equalisation valve of the test tool assembly.

The bypass arrangement may comprise a conduit or flow line. The flow line may be arranged to pass through at least one of the test tool assembly and the isolation tool assembly. In use, a downstream side of the second control module may communicate with an upstream side of the first control module via the conduit or flow line. The flow line may communicate with the chamber defined between the isolation tool assembly and the pipe wall. In use, the flow line may permit fluid to be supplied to or vented from the test boundary bounded by the test tool assembly.

The test pressure may be provided by raising the isolated downstream pressure. The test pressure may also or alternatively be provided by an accumulator.

Beneficially, the use of an accumulator obviates the requirement to apply the test pressure using fluid applied from an end of the pipe, which in many cases may be over significant distances and which would require a significant amount of drying after the test has been completed before the pipe is fully operational. Furthermore, the use of an accumulator obviates the need to supply a test pressure by providing an intervention through the pipe wall.

The accumulator can be deployed in the pipe with the test tool assembly. In particular embodiments, however, the accumulator may be disposed within a replacement pipe section, spool or the like.

The accumulator may be of any suitable form and construction.

The accumulator may comprise a pressure supply. In particular embodiments, the pressure supply comprises a high pressure gas cylinder.

The accumulator may comprise a control system. The control system may comprise a pressure regulator valve. In use, the pressure regulator valve may be set to the test pressure. The control system may comprise a gas isolation valve. In use, the gas isolation valve may communicate with the gas cylinder.

The accumulator may comprise a gas chamber.

The accumulator may comprise a liquid sump.

A barrier may separate the gas chamber from the liquid sump.

The barrier may comprise a liquid barrier. The barrier may comprise a piston. In use, the piston may displace liquid in the liquid sump into the test void by the gas pressure acting on the piston.

The accumulator could beneficially be connected to an opposing test plug, pre-installed in the new pipe spool. Beneficially, this would minimise the test volume and hence the accumulator capacity

The test tool assembly may comprise or be operatively associated with a control system. At least part of the control system may comprise a remote control system, for example a through wall remote control system. The test tool assembly may comprise a control module.

The test tool assembly may be coupled to the isolation tool assembly.

Any suitable connector may be utilised. In particular embodiments, the connector may comprise a ball and socket connector, which permits the tool assembly to traverse through the pipe and around bends or angles in the pipe. However, it will be recognised that in other embodiments the plug modules may be coupled together by any suitable coupling arrangement or may not be coupled.

The test tool assembly may be configured to be disposed through the pipe by any suitable means. The test tool assembly or at least part of the test tool assembly may be configured to be disposed through the pipe by fluid pressure. The test tool assembly may comprise a pigging tool. Alternatively or additionally, the test tool may be disposed through the pipe by mechanical means, for example but not exclusively by a cable or the like.

### BRIEF DESCRIPTION OF THE DRAWINGS

These and other aspects of the present invention will now be described, by way of example only, with reference to the accompanying drawings, in which:
Figure 1 shows a test tool assembly according to an embodiment of the present invention;
Figure 2 shows an enlarged view of an isolation plug module of the test tool assembly shown in Figure 1;
Figure 3 shows an enlarged view of a test plug module of the test tool assembly shown in Figure 1;
Figure 4 shows a test tool assembly according to a first embodiment of the present invention in a first stage of an operation;
Figure 5 shows the test tool assembly shown in Figure 4 in a second stage of operation;
Figure 6 shows the test tool assembly shown in Figures 4 and 5 in a third stage of operation;
Figure 7 shows the test tool assembly shown in Figures 4 to 6 in a fourth stage of operation;
Figure 8 shows the test tool assembly shown in Figures 4 to 7 in a fifth stage of operation;
Figure 9 shows an accumulator forming part of a test tool assembly according to embodiments of the present invention;
Figure 10 shows a test tool assembly according to a second embodiment of the present invention in a first stage of an operation;
Figure 11 shows an enlarged view of a first part of the test tool assembly shown in Figure 10;
Figure 12 shows an enlarged view of a second part of the test tool assembly shown in Figure 10;
Figure 13 shows a test tool assembly according to the second embodiment of the present invention in a second stage of an operation;
Figure 14 shows an enlarged view of a first part of the test tool assembly shown in Figure 13;
Figure 15 shows an enlarged view of a second part of the test tool assembly shown in Figure 13;
Figure 16 shows a test tool assembly according to the second embodiment of the present invention in a third stage of an operation;
Figure 17 shows an enlarged view of a first part of the test tool assembly shown in Figure 16;
Figure 18 shows an enlarged view of a second part of the test tool assembly shown in Figure 16;
Figure 19 shows a test tool assembly according to the second embodiment of the present invention in a fourth stage of an operation;
Figure 20 shows an enlarged view of a first part of the test tool assembly shown in Figure 16;
Figure 21 shows an enlarged view of a second part of the test tool assembly shown in Figure 16;
Figure 22 shows a test tool assembly according to the second embodiment of the present invention in a fifth stage of an operation;
Figure 23 shows an enlarged view of the accumulator shown in Figure 22;
Figure 24 shows an enlarged view of a first part of the test tool assembly shown in Figure 22;
Figure 25 shows an enlarged view of a second part of the test tool assembly shown in Figure 22;

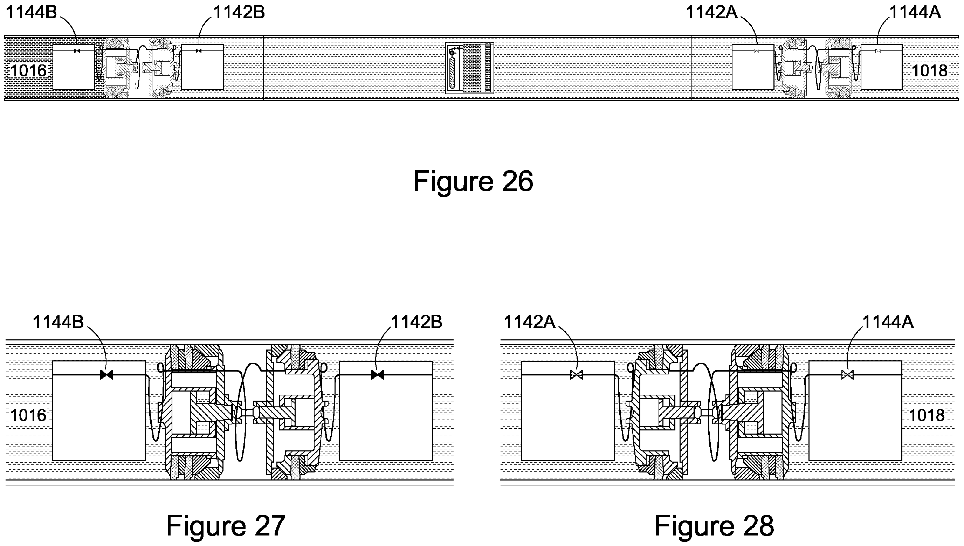

Figure 26 shows a test tool assembly according to the second embodiment of the present invention in a sixth stage of an operation;
Figure 27 shows an enlarged view of a first part of the test tool assembly shown in Figure 26;
Figure 28 shows an enlarged view of a second part of the test tool assembly shown in Figure 26;
Figure 29 shows a test tool assembly according to a second embodiment of the present invention in a seventh stage of an operation;
Figure 30 shows an enlarged view of a first part of the test tool assembly shown in Figure 29;
Figure 31 shows an enlarged view of a second part of the test tool assembly shown in Figure 29;
Figure 32 shows a pipe spool for use in a third embodiment of the present invention;
Figure 33 shows a test tool assembly according to the third embodiment of the present invention in a first stage of an operation;
Figure 34 shows an enlarged view of a first part of the test tool assembly shown in Figure 33;
Figure 35 shows an enlarged view of a second part of the test tool assembly shown in Figure 33;
Figure 36 shows a test tool assembly according to the third embodiment of the present invention in a second stage of an operation;
Figure 37 shows an enlarged view of a first part of the test tool assembly shown in Figure 36;
Figure 38 shows an enlarged view of a second part of the test tool assembly shown in Figure 36;
Figure 39 shows a test tool assembly according to the third embodiment of the present invention in a third stage of an operation;
Figure 40 shows an enlarged view of a first part of the test tool assembly shown in Figure 39;
Figure 41 shows an enlarged view of a second part of the test tool assembly shown in Figure 39;
Figure 42 shows a test tool assembly according to the third embodiment of the present invention in a fourth stage of an operation;
Figure 43 shows an enlarged view of a first part of the test tool assembly shown in Figure 42;
Figure 44 shows an enlarged view of a second part of the test tool assembly shown in Figure 42;
Figure 45 shows a test tool assembly according to a third embodiment of the present invention in a fifth stage of an operation;
Figure 46 shows an enlarged view of a first part of the test tool assembly shown in Figure 45;
Figure 47 shows an enlarged view of a second part of the test tool assembly shown in Figure 45;
Figure 48 shows a test tool assembly according to the third embodiment of the present invention in a sixth stage of an operation;
Figure 49 shows an enlarged view of a first part of the test tool assembly shown in Figure 48;
Figure 50 shows an enlarged view of a second part of the test tool assembly shown in Figure 48;
Figure 51 shows a test tool assembly according to the third embodiment of the present invention in a seventh stage of an operation;
Figure 52 shows an enlarged view of a first part of the test tool assembly shown in Figure 51; and
Figure 53 shows an enlarged view of a second part of the test tool assembly shown in Figure 51.

### DETAILED DESCRIPTION OF THE DRAWINGS

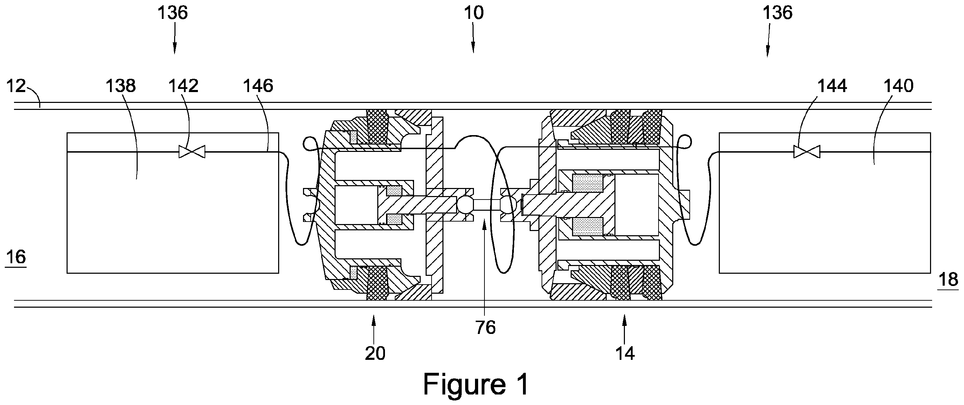

Figure 1 shows a test tool assembly 10 according to an embodiment of the present invention, the test tool assembly 10 shown located within a section of pipe 12. As shown in Figure 1, the test tool assembly 10 comprises an isolation plug module 14 for isolating an upstream pipe section 16 from a downstream pipe section 18 and a test plug module 20 which permits a pressure test to be carried out on the upstream pipe section 16.

In use, the test tool assembly 10 may be disposed through the pipe 12 in a deactivated or run-in configuration, the test tool assembly 10 on reaching the desired location in the pipe 12 being activated to isolate the upstream pipe section 16 from the downstream pipe section 18 and permit the pressure test to be carried out on the upstream pipe section 16 by applying a test pressure Pt in the upstream pipe section 16. This may be achieved without the requirement to create additional penetrations in the pipe 12, and without disturbing the isolation provided by the isolation plug module 14, while also overcoming or at least mitigating the risk of overstressing the pipe 12 and while ensuring that the test pressure PT can be safely removed in the event of control system failure.

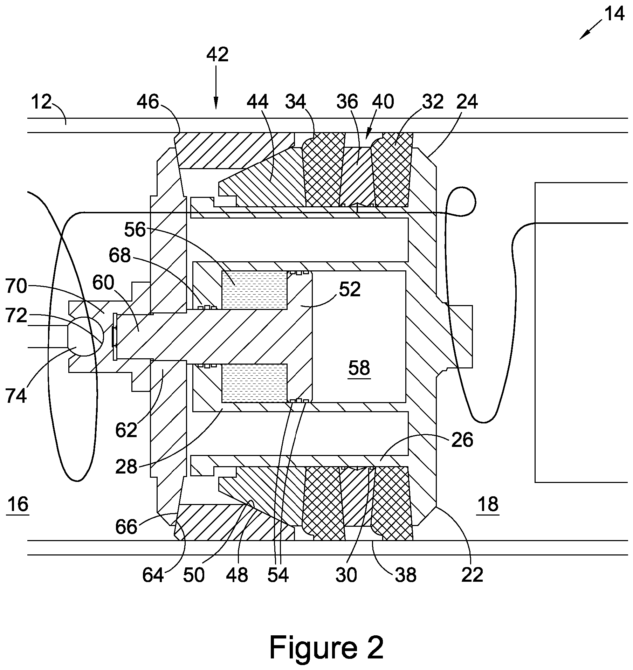

Figure 2 shows an enlarged view of the isolation plug module 14 shown in Figure 1. In use, the isolation plug module 14 is disposed through the pipe 12 and activated to isolate the upstream pipe section 16 from the downstream pipe section 18.

As shown in Figure 2, the isolation plug module 14 comprises a body 22 having a first body portion which forms a downstream end of the isolation plug module 14 (right end as shown in the figures) and which defines an annular pressure head 24 of the isolation plug module 14, a second body portion which extends from the pressure head 24 and which defines a support core 26 of the isolation plug module 14, and a third body portion which also extends from the pressure head 24 and which defines an activation cylinder 28 of the isolation plug module 14.

A recess 30 is provided in the outside surface of the support core 26 and two annular elastomeric compression seal elements 32, 34 are disposed in the recess 30, a primary isolation seal element 32 and a secondary isolation seal element 34. An annular ring 36 is disposed in the recess 30 between the seal elements 32, 34. In use, the annular ring 36, seal elements 32, 34 and an inner face 38 of the pipe 12 together define an annular volume or chamber 40 when the seal elements 32, 34 are energised.

A lock 42 is disposed around the support core 26, the lock 42 comprising a lock bowl 44 slidably disposed in the recess 30 and a plurality of tapered lock segments 46 disposed around the lock bowl 44. The lock bowl 44 and the lock segments 46 each have cooperating tapered surfaces 48, 50 arranged so that sliding movement of the lock bowl 44 in an upstream direction (to the left as shown in the Figures) urges the lock segments 46 into engagement with the pipe 12.

The activation cylinder 28 defined by the third body portion of the isolation plug module 14 is disposed radially inwards of the support core 26 and accommodates a lock and seal actuating piston 52. The actuating piston 52 is slidably mounted within the cylinder 28 and seal rings 54 are disposed around the actuating piston 52 such that the actuating piston 52 defines a first piston chamber 56 and a second piston chamber 58 within the activation cylinder 28. The first piston chamber 56 is in communication with a fluid supply passage (not shown) which supplies hydraulic fluid to the first piston chamber 56. A piston rod 60 extends from the actuating piston 52 and comprises an annular compression flange 62. As shown in Figure 2, the compression flange 62 comprises an angled guide surface 64 which in use engages cooperating end faces 66 of the lock segments 46. Seal rings 68 are provided in the support core 22 at the interface between the support core 26 and the piston rod 60 and prevent fluid leakage from the piston chamber 56.

The isolation plug module 14 further comprises a cap or seat 70 which is disposed over the end of the piston rod 60 and which defines a socket 72 for receiving a ball 74 of a ball and socket connector 76 (see Figure 1) used in the illustrated embodiment to couple the isolation plug module 14 to the test plug module 20 which will be described further below.

In use, the isolation plug module 14 is set by the application of hydraulic pressure in the first piston chamber 56, urging the body 22 towards a retracted configuration (to the left as shown in the figures). Movement of the body 22 first sets the lock 42, the engagement between the cooperating surfaces 48, 50 of the lock bowl 44 and the lock segments 46 urging the lock segments 46 outwards into engagement with the pipe 12. Continued movement of the body 22 then compresses the seal elements 32, 34, the seal elements 32, 34 expanding radially outwards to engage the pipe wall 38, as illustrated in Figures 1 and 2.

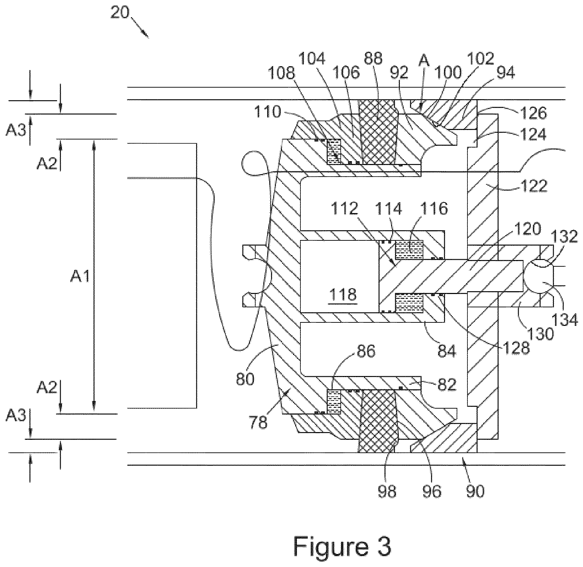

Figure 3 shows an enlarged view of the test plug module 20 shown in Figure 1. In use, the test plug module 20 is disposed through the pipe 12 and activated to provide a test boundary for the application of the test pressure Pt.

As shown in Figure 3, the test plug module 20 comprises a body 78 having a first body portion which forms an upstream end of the test plug module 20 (left end as shown in the figures) and which defines an annular pressure head 80 of the test plug module 20, a second body portion which extends from the pressure head 80 and which defines a support core 82 of the test plug module 20, and a third body portion which also extends from the pressure head 80 and which defines a lock activation cylinder 84 of the test plug module 20.

A recess 86 is provided in an outside surface of the support core 82 and an annular elastomeric compression seal element 88 is disposed in the recess 86.

A lock 90 is disposed around the support core 82 at a downstream end thereof, the lock 90 comprising a lock bowl 92 and a plurality of tapered lock segments 94 disposed around the lock bowl 92 and which are configured to engage the lock bowl 92 in use. In the test plug module 20, the lock bowl 92 is fixedly secured to the support core 82 and defines a downstream end of the recess 86, the upstream end face 96 of the lock bowl 92 defining an abutment shoulder 98 for the annular elastomeric compression seal element 88 in use. The lock bowl 92 and the lock segments 94 each have cooperating tapered surfaces 100, 102 arranged so that axial movement of the lock bowl 92 (with the pressure head 80 since the lock bowl 92 is fixedly secured thereto) urges the lock segments 94 into engagement with the pipe 12.

An annular piston is slidably disposed around the support core 82 and defines a seal actuating piston 104 of the test plug module 20 in use. A first portion 106 of the seal actuating piston 104 is disposed in the recess 86 of the support core 82 and a chamber 108 is defined between the seal actuating piston 104 and the support core 82. The chamber 108 is isolated by seal rings 110 and is in communication with a fluid supply passage (not shown). In use, fluid supplied to the chamber 108 urges the piston 104 towards the annular elastomeric compression seal element 88 (to the right as shown in Figure 2) to compress the seal element 88 into sealing engagement with the pipe 12.

The lock activation cylinder 84 defined by the third body portion of the test plug module 20 accommodates a lock actuating piston 112. The lock actuating piston 112 is slidably mounted within the lock activation cylinder 84 and seal rings 114 are disposed around the piston 112 such that the piston 112 defines a first piston chamber 116 and a second piston chamber 118 within the activation cylinder 84. The first piston chamber 116 is in communication with a fluid supply passage (not shown). A piston rod 120 extends from the actuating piston 112 and comprises an annular compression flange 122. As shown in Figure 3, the compression flange 122 comprises a substantially rightangled guide surface 124 which in use engages cooperating end faces 126 of the lock segments 94. Seal rings 128 are provided in the support core 82 at the interface between the support core 82 and the piston rod 120 and prevent fluid leakage from the piston chamber 112.

As with the isolation plug module 14, the test plug module 20 further comprises a cap or seat 130 which is disposed over an end of the piston rod 120 and which defines a socket 132 for receiving a ball 134 of the ball and socket connector 76.

In use, the test plug module 20 is set by sequentially activating the lock 90 and then the seal element 88 via their respective activation arrangements as will be described below.

The lock 90 is set by the application of hydraulic pressure in the first piston chamber 116, this urging the body 80 towards the lock 90 (to the right as shown in the figures) and so urging the test plug module 20 towards a retracted configuration. The engagement between the cooperating surfaces 100, 102 of the lock bowl 92 and the lock segments 94 urges the lock segments 94 radially outwards into engagement with the pipe 12. As the socket 134 is fixed to the isolation plug module 14 via the connector 76, activation of the lock 90 will be generated by the lock bowl 94 moving axially towards the annular compression flange 124. Due to the engagement between the guide surface 124 and the end faces 126 of the lock segments 94, this axial movement of the lock bowl 92 results in no axial movement of the lock segments 94 during setting which obviates any risk of the lock 90 jamming.

The seal element 88 is set by the application of hydraulic pressure in the chamber 108, which urges the seal activating piston 104 to compress the seal element 88 against the abutment shoulder 98 of the lock bowl 92. The seal element 88 expands radially to engage the pipe wall 38, as illustrated in Figures 1 and 3.

Referring again to Figure 1, the test tool assembly 10 further comprises a bypass arrangement 136. In use, the bypass arrangement 136 permits fluid bypass of the isolation plug module 14 and the test plug modules 20.

As shown in Figure 1, the bypass arrangement 136 comprises a first control module 138 and a second control module 140. The first control module 138 is disposed upstream of the test plug module 20 (to the left as shown in Figure 1) and comprises an annulus vent valve 142 while the second control module 140 is disposed downstream of the isolation plug module 14 (to the right as shown in Figure 1) and comprises a pressure equalisation valve 144. As shown, the upstream side of the pressure equalisation valve 144 is in communication with the downstream side of the annulus vent valve 142 via a conduit or flow line 146 which is arranged to pass through the isolation plug module 14 and the test plug module 20. The flow line 146 is disposed through the support core 26 and communicates with the chamber 44 of the isolation plug module 14 and permits fluid to be supplied to or vented from the chamber 44 from the downstream pipe section 18 or the upstream pipe section 16.

It will be observed that in the test plug module 20, the total axial load force acting on the test plug module 20 as a result of the test pressure Pt depends on the area of the test plug module 20 exposed to the test pressure Pt. As the seal activation arrangement is independent of the lock activation arrangement, this total axial load force can be split into three force components: (i) a first force component acting on the surface area of the pressure head 80 (as defined by the cross sectional area A1 of the pressure head 80); (ii) a second force component acting on the end of the seal actuating piston 104 (as defined by the annular cross sectional area A2, which is bounded by the outside diameter of the seal actuating piston 104 minus the area A1 of the pressure head 80); and (iii) a third force component acting on the annular cross sectional area A3 of the seal element 88, which is bounded by the cross-sectional area of the pipe 12 minus the area A2 of the seal actuating piston 104. The test pressure Pt acting on all three of these areas A1, A2, and A3 is transmitted to, and generates an axial load force on, the lock bowl 92, thus further energises the lock 90 radially into engagement with the pipe wall 38, increasing the grip between the lock 90 and the pipe 12. However, it can be seen that as the seal activation arrangement (via seal actuating piston 104) in the test plug module 20 is independent of the lock activation arrangement (via the body 78 and the lock bowl 92) the axial load force acting on the pressure head 80 (that is, the force resulting from the test pressure Pt acting on the area A1) does not pass through the seal element 88 and so does not apply a compression load force to the seal element 88. This differs from the isolation plug module 14, in which the lock 42 and the seal elements 32, 34 are energised by the load force acting on the pressure head 24. Although the test pressure Pt acting on the seal actuating piston 104 of the test plug module 20 will assist the compression of the seal element 88, this additional set load will be limited to the annular area A2 defined above. This annular area A2 defines a smaller area than that of the seal cross sectional area A3, such that the force transmitted to the seal element 88 resulting from the test pressure Pt is lower than the force required to maintain a seal between the seal element 88 and the pipe 12. Beneficially, since the force transmitted to the seal element 88 resulting from the test pressure Pt is less than that required to maintain energisation of the seal element 88, the test plug module 20 will passively release in the event of control system failure resulting in loss of fluid supply to the seal activation chamber 108 and without the requirement for intervention through the pipe wall 38 as may otherwise be required, even where the test pressure Pt is still being applied.

Furthermore, the force transmitted to the pipe 12 via the seal element 88 as a result of the test pressure Pt does not overstress the pipe 12. In a traditional isolation plug, a test pressure would act on the whole pressure head, the resulting load force being balanced by the seal rubber pressure. The difference in areas between the pressure head and the seal in a traditional isolation plug generates a seal intensification load which generates a local stress in the pipe higher than that of the isolated pressure. While this seal intensification load is beneficial when isolating pressure from a worksite as it assists in making the isolation fail safe and the isolated pressure can be maintained at a level which will not overstress the pipe, in the case of a pressure test in which a test pressure up to 90% of the pipe yield may be applied, this seal intensification load would risk overstressing the pipe. However, as the seal rubber pressure is not intensified in embodiments of the present invention, the risk of overpressure is removed. Also, since the seal activation arrangement and lock activation arrangement are independent, the test plug module 20 is securely retained in the pipe 12 as the seal element 88 is released and ensures a safe release of the energy of the test pressure Pt without the test plug module 20 moving.

It will also be observed that the pressure head 80 of the test plug module 20 is static as the seal element 88 is set. This contrasts with a traditional isolation plug in which the pressure head moves towards the lock, resulting in a significant rise in pressure in the trapped volume which may, in some cases, be sufficient to disturb the primary isolation (such as may be provided by an isolation plug module). Since in embodiments of the present invention the pressure head 80 is static as the seal element 88 is set and unset, disturbance of the primary isolation is obviated or at least mitigated.

As shown in Figure 3, the taper angle A of the surfaces 102, 104 of the test plug module 20 defines a relatively large or steep angle, such that the taper lock segments 94 are urged in a substantially radial direction when engaging and disengaging from the pipe 12. Thus, the proportion of any axial forces transmitted through the lock bowl 92 which are converted to radial forces acting on the pipe 12 is less, assisting in the passive release of the test plug module 20 from the pipe 12.

Also, the lock 42 of the isolation plug module 14 and the lock 90 of the test plug module 20 are arranged in opposing relation to each other, that is in back-to-back orientation, and in each of the isolation plug module 14 and the test plug module 20 the seal elements 32, 34, 88 are disposed outside the locks 42, 90. On setting, the locks 42, 90 will deploy radially relative to each other and when the seal elements 32, 34, 88 are pulled away, the respective lock bowls 44, 92 will move axially apart, allowing radial contraction of the lock segments 46, 94, thereby preventing a lock bind.

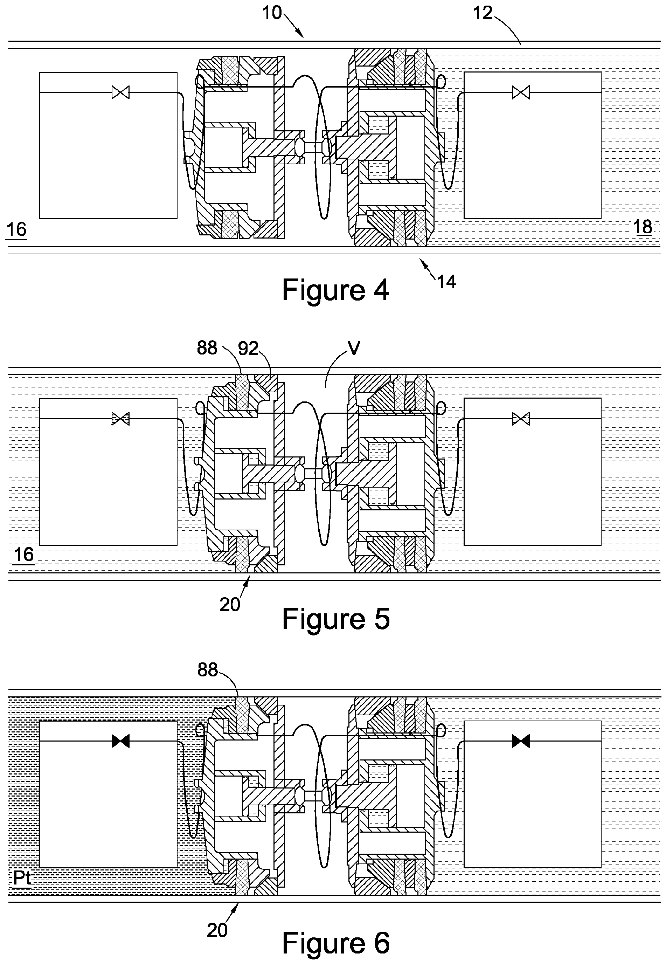

Operation of an embodiment of the invention will now be described with reference to Figures 4 to 8.

The test tool assembly 10 is deployed to the desired location inside the pipe 12 by suitable means, for example by pigging, although the assembly 10 may alternatively or additionally be pushed or towed by a crawler. Once in position, the isolation plug module 14 is set to isolate the upstream pipe section 16 from the downstream pipe section 18. Once an initial seal has been formed between the pipe wall 38 and the seal elements 32, 34, and upstream pressure is bled off, the differential pressure across the isolation plug module 14 - which acts in parallel to the activation arrangement (via the chamber 56) - urges the pressure head 24 to further compress the seal elements 32, 34 and maintain sealing engagement between the seal elements 32,34 and the pipe wall 28 (Figure 4).

Following the setting of the isolation plug module 14, the lock 90 of the test plug module 20 is set in the manner described above. At this stage, the seal element 88 is unset so there is free flow around the test plug module 20 and no pressure rise between the test plug module 20 and the isolation plug module 14. Once the lock 90 has securely engaged the pipe 12, the next step is to set the seal element 88 of the test plug module 20, separating the upstream pipe section 16 from the isolation plug module 14 (Figure 5). As described above, when activating the test plug module 20 there is no or minimal compression of the void V between the test plug module 20 and the isolation plug module 14. Maintaining the void V at low pressure both maintains the fail safe seal energisation of the isolation plug module 14 and prevents the hydraulic activation from being dumped by the control system recovery fail safe systems.

The pressure inside the test boundary created by the test plug module 20 can now be raised to the required test pressure Pt (Figure 6). As described above, the seal element 88 of the test plug module 20 requires hydraulic pressure in the chamber 108 to be maintained in order to remain energised, such that the seal element 88 will release in the event fluid supply to the chamber 108 or power is removed.

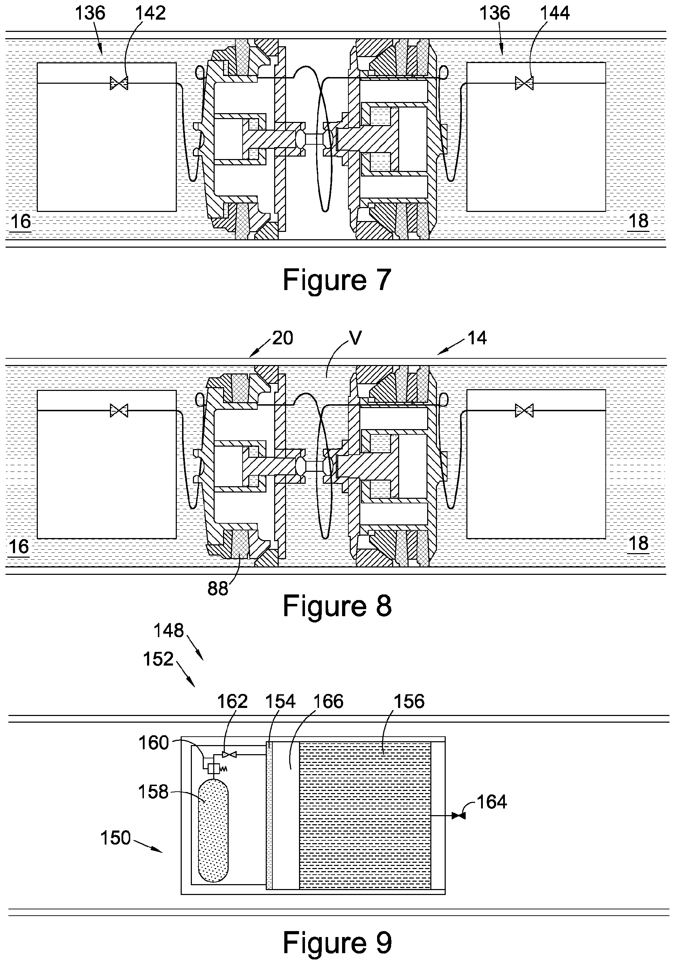

Upon completion of the test, the test pressure Pt can be released which, in the illustrated embodiment, is achieved by the bypass arrangement 136. Opening the bypass valves 142,144 permits fluid transfer between the upstream pipe section 16 and the downstream pipe section 18 to equalise pressure (Figure 7).

Once the pressure has been equalised, the seal element 88 may then be released, equalising the pressure between the upstream pipe section 16 and the void V (Figure 8). The isolation plug module 14 will remain in the set configuration until pressure immediately across the isolation plug module 14 has been equalised (equal pressure in the downstream pipe section 18 and the void V). Thus, the release of the test plug module 20 permits the isolation plug module 14 to be released and the test tool assembly 10 to be removed from the pipe 12. It will be recognised that the capability of the test plug module 20 to passively release thus ensures that the test plug module 20 and the isolation plug module 14 can be released in the event of control system failure.

The test pressure Pt may be provided by a number of different means and in particular embodiments of the present invention, the test pressure is provided by an accumulator 148, as will be described below. In use, the accumulator 148 can be deployed in the pipe 12 with the isolation and test plug modules, such as the isolation and test plug modules 14, 20, or may be disposed within a replacement pipe section or spool as will be described below and so permits the test pressure Pt to be applied over any given interval. Beneficially, the use of an accumulator 148 obviates the requirement to apply the test pressure Pt using fluid applied from an end of the pipe 12, which in many cases may be over significant distances and which would require a significant amount of drying after the test has been completed before the pipe is fully operational. Furthermore, the use of an accumulator 148 obviates the need to supply a test pressure by providing an intervention through the pipe wall.

Figure 9 shows an accumulator 148 forming part of and which is suitable for use in embodiments of the present invention.

As shown in Figure 9, the accumulator 148 comprises a pressure supply 150, a control system 152, a gas chamber 154 and a liquid sump 156. In the illustrated embodiment, the pressure supply 150 provided by a high pressure gas cylinder 158. The control system 152 comprises a pressure regulator valve 160 set to the test pressure Pt, a gas isolation valve 162 disposed between and communicating with the gas cylinder 158 and a liquid isolation valve 164. A liquid barrier in the form of axial piston 166 separates the gas chamber 154 from the liquid sump 156 and, in use, liquid from the sump 156 will be displaced by the gas pressure acting on the piston 166.

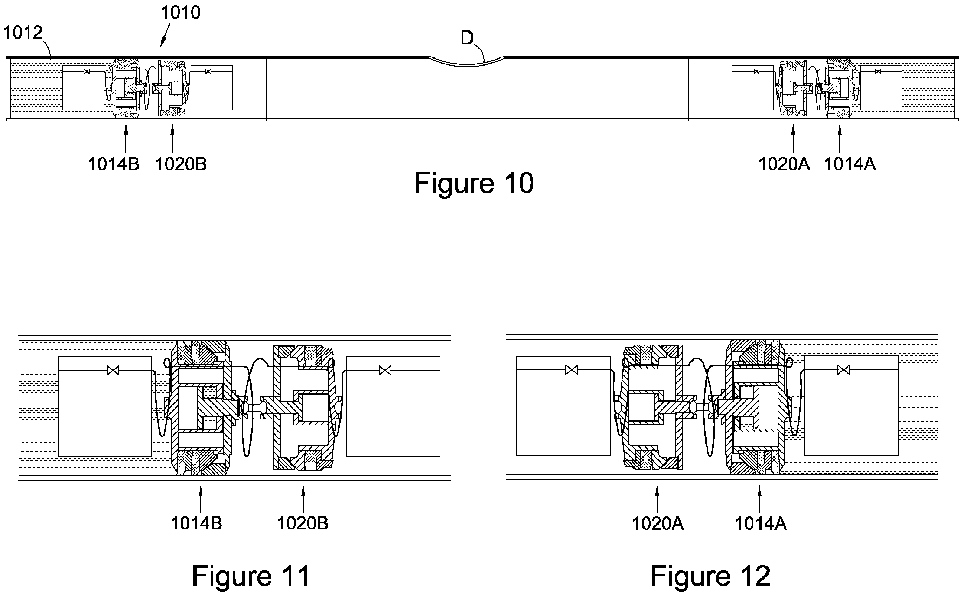

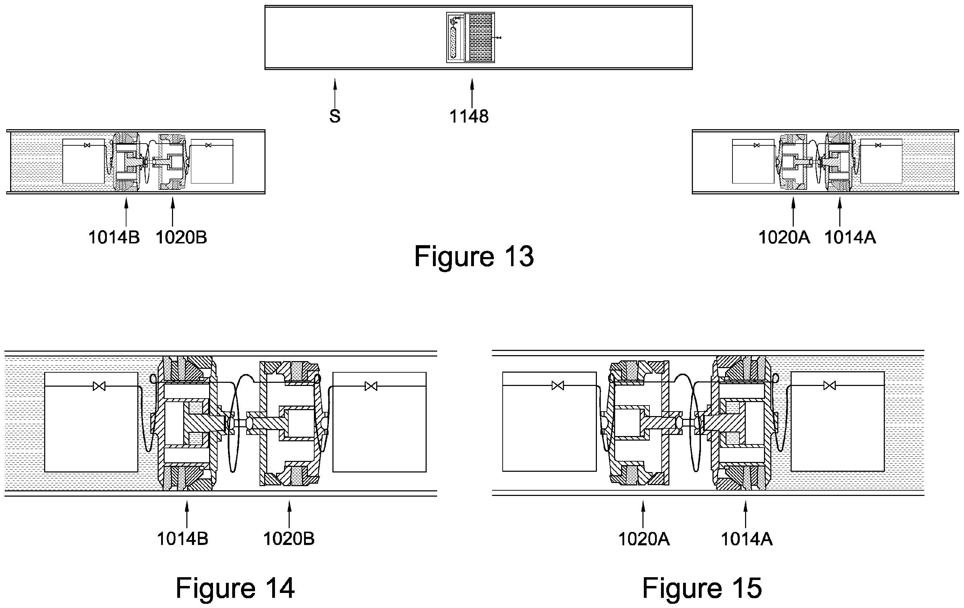

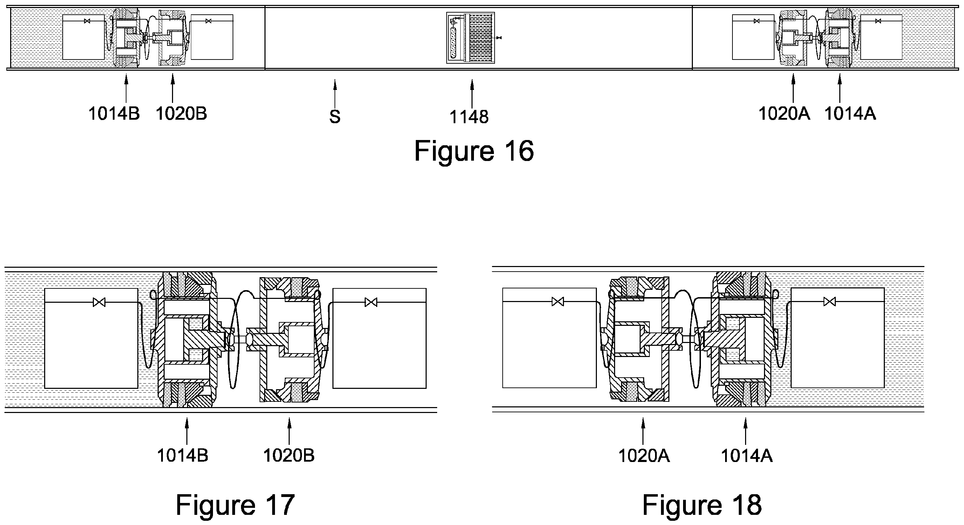

Embodiments of the present invention may be utilised in a number of applications where it is desired to perform a pressure test to a section of pipe and operation of a test tool assembly 1010 according to another embodiment of the invention will now be described with reference to Figures 10 to 25, the test tool assembly 1010 for use in the repair and testing of a mid line section of pipeline 1012 having a defect D and in which the test pressure Pt is supplied by an accumulator 1148 (Figure 13). It will be recognised that the test tool assembly 1010 is similar to the test tool assembly 10 such that like components are indicated by like reference signs incremented by 1000.

The assembly 1010 is deployed to the location inside the pipeline 1012 by traditional means. This can be by pigging, pushing or towed by a crawler.

In this embodiment, the assembly 1010 comprises two isolation plug modules 1014A, 1014B and two test plug modules 1020A, 1020B. The isolation plug module 1014A is coupled to test plug module 1020A. Isolation plug module 1014B is coupled to test plug module 1020B.

Isolation plug module 1014A and test plug module 1020A are first pigged to a location downstream of the defect D. Pressure head 1024A of isolation plug module 1014A is positioned at the downstream end of the module 1014A while pressure head 1080A of test plug module 1020A is positioned at the upstream end of the module 1020A. Isolation plug module 1014B and test plug module 1020B are then pigged to a location upstream of the defect D. Pressure head 1024B of isolation plug module 1014B is positioned at the upstream end of the module 1014B while pressure head 1080B of test plug module 1020B is positioned at the downstream end of the module 1020B. Once in position, the isolation plugs 1014A, 1014B are set and the pressure between the plugs vented (Figures 10 to 12). As the isolated section of the pipeline 1012 is to be removed, venting the pressure between the isolation plugs 1014A, 1014B may be performed by an external breach in the pipeline 1012, such as a hot tap penetration (not shown).

The damaged section of pipe can then be removed and replaced and a new pipe spool S attached, the pipe closure being made for example by welding or mechanical connector or other suitable means. In the illustrated embodiment, the accumulator 1148 is deployed in the new pipe spool S, although it could alternatively be attached to the assemblies. We now have a newly installed repair, at ambient pressure between two isolation plugs 1014A, 1014B (Figures 13 to 18).

In order to perform a pressure test in the new pipe section, for example to test the welds or mechanical connectors, without reverse pressurising the isolation plug modules 1014A, 1014B and with no pipe penetrations to supply the pressure, the next step is set the locks 1090A, 1090B on each test plug module 1020A, 1020B as described above. It will be recognised that the seal arrangement 1088A, 1088B on each test plug module 1020A, 1020B is unset at this time so there is free flow around the test plug modules 1020A, 1020B and no pressure rise in the voids Va, Vb between the test plug module 1020A, 1020B and the isolation plugs 1014A, 1014B.

The next step is to set the seals 1088A, 1088B on the test plug modules 1020A, 1020b as described above. It will be recognised that when the seals 1088A, 1088B contact the pipe wall, separating the pipe repair from the isolation plugs 1014A, 1014B, there is no or minimal compression of the void between the test plug modules 1020A, 1020B and the isolation plug modules 1014A, 1014B. As the voids Va, Vb between the test plug modules 1020A, 1020B and the isolation plug modules 1014A, 1014B are isolated, the voids may be maintained at low pressure relative to the isolated pipeline pressure Pp and so maintain the isolation plug fail safe seal energisation across the isolation plug module 1014A, 1014B and prevent the hydraulic activation from being dumped by the control system recovery fail safe systems.

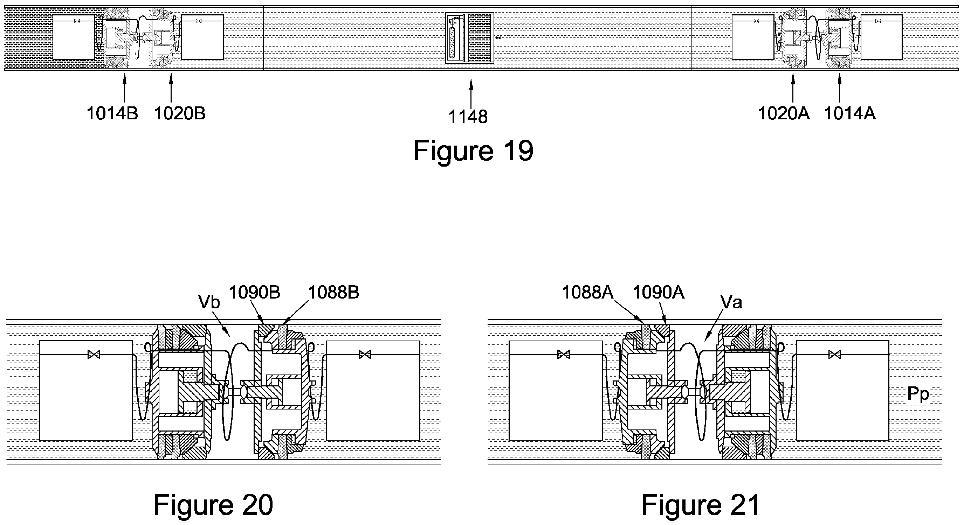

In order to minimise the accumulator volume required to raise the repaired volume to the full test pressure, the bypass arrangement is operated by opening the valves to allow pressure into the pipeline repair, without raising the pressure between the isolation and test plug modules. This will allow the test void to be pressurised to the existing pipeline pressure Pp before operating the accumulator 1148. Once the pressure in this void equalises with the pipeline pressure, the valves are closed (Figures 19 to 21).

It will be understood that the isolation plugs modules 1014A, 1014B are designed with a "no single failure" assessment and so the bypass arrangements 1138A, 1138B comprise a 2 stage system for the pressure bypass, each system being fully independent. In use, the isolation plug modules 1014A, 1014B can bypass the primary seal of the isolation plug modules into the test void Vt and the test plug control module can vent the test void Vt past the secondary seal of the isolation plug. Thus a failure of the bypass valve on the primary isolation seal will not bypass the secondary seal, and a failure of the vent valve on the secondary seal will not invalidate the primary isolation.

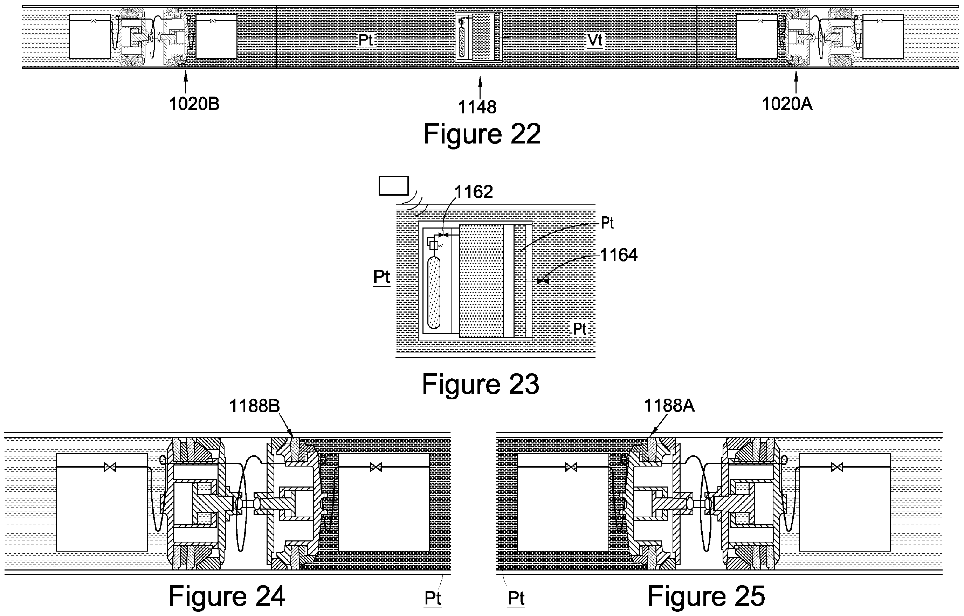

The pressure inside the test boundary created by the test tool modules 1020A, 1020B can now be raised by the accumulator 1148. In the illustrated embodiment, communication with the accumulator 1148 is achieved remotely ELF through wall communications (shown schematically in Figure 23), but any through wall communication system can be used. The valve 1164 on the accumulator 1148 communicates the liquid from the sump to the test void Vt and the valve 1162 applies compressed gas pressure to displace the liquid. In operation, the valve 1164 is opened. Then the valve 1162 is opened until the test pressure Pt is achieved. The regulator 1160 on the gas supply will limit the test pressure Pt, however the control system 1152 will also monitor the test pressure Pt and shut both valves 1162, 1164 when the test pressure Pt is achieved. The valve 1164 can then act as a separator between the gas and the test boundary provided by the test plug seal elements 1118A, 1188B to ensure a solid test (Figures 22 to 25).

Upon completion of the test, the test pressure Pt can be released which, in the illustrated embodiment, is achieved by the bypass arrangement. Opening the bypass valves 1142A, 1142B, 1144A, 1144B permits fluid transfer between the upstream pipe section 1016 and the downstream pipe section 1018 to equalise pressure.

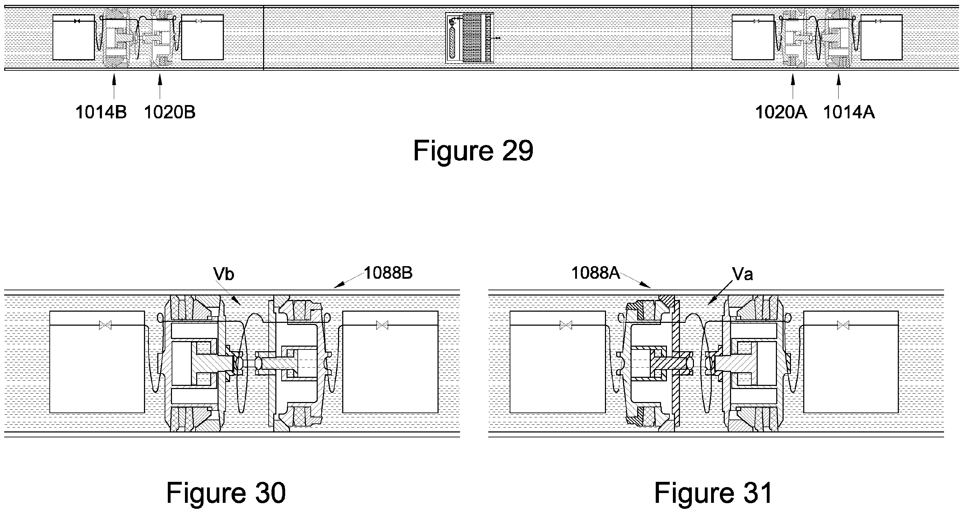

Once the pressure has been equalised, the seal elements 1088A, 1088B may then be released, equalising the pressure between the upstream pipe section 1016 and the voids Va, Vb. The isolation plug modules 1014A, 1014B will remain in the set configuration until pressure immediately across the isolation plug modules 1014A, 1014B has been equalised (Figures 29 to 31). The release of the test plug modules 1020A, 1020B permit the isolation plug modules 1014A, 1014B to be released and the test tool assembly 1010 to be removed from the pipe 1012. It will be recognised that the capability of the test plug modules 1020A, 1020B to passively release thus ensures that the test plug modules 1020A,1020B and the isolation plug modules 1014A, 1014B can be released in the event of control system failure.

Embodiments of the invention thus facilitate the mid line or pipe end testing of pipe without the requirement to provide an external penetration through the wall of the pipe and while retaining fail safe operation.

It should be understood that the embodiments described herein are merely exemplary and that various modifications may be made thereto without departing from the scope of the invention.

For example, while in the embodiment described above a single accumulator 1148 is provided in the replacement pipe spool S, in other embodiments a plurality of accumulators may be provided.

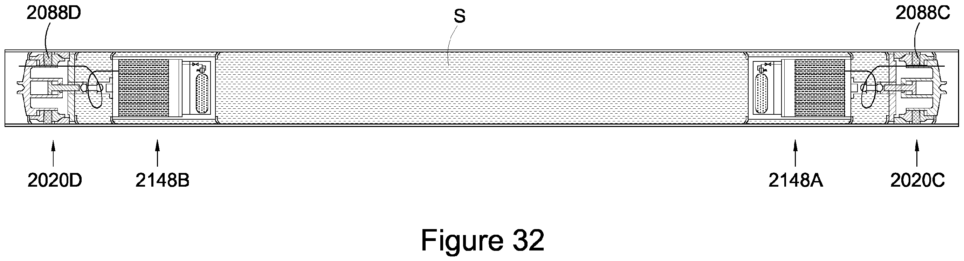

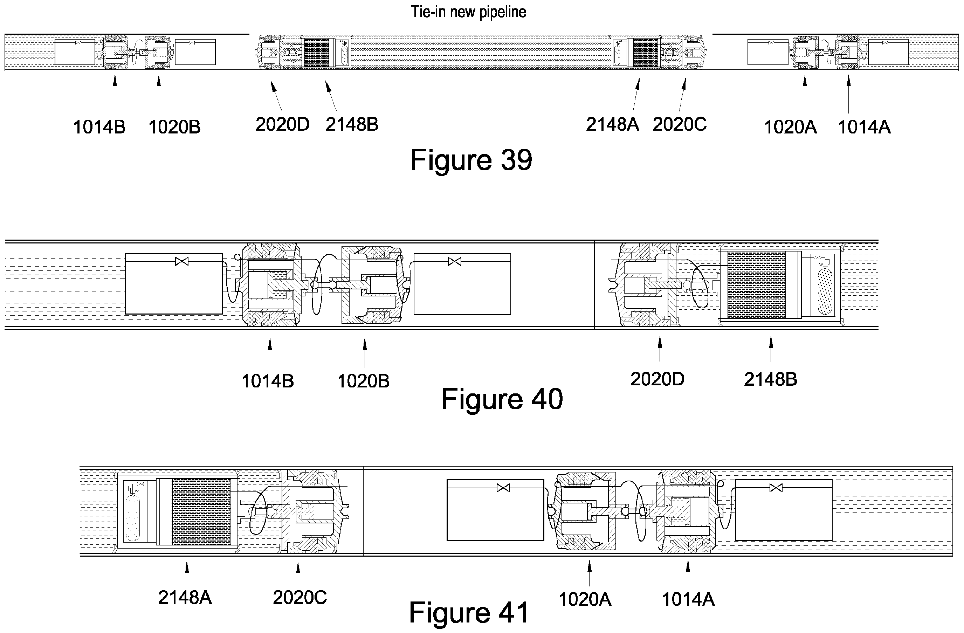

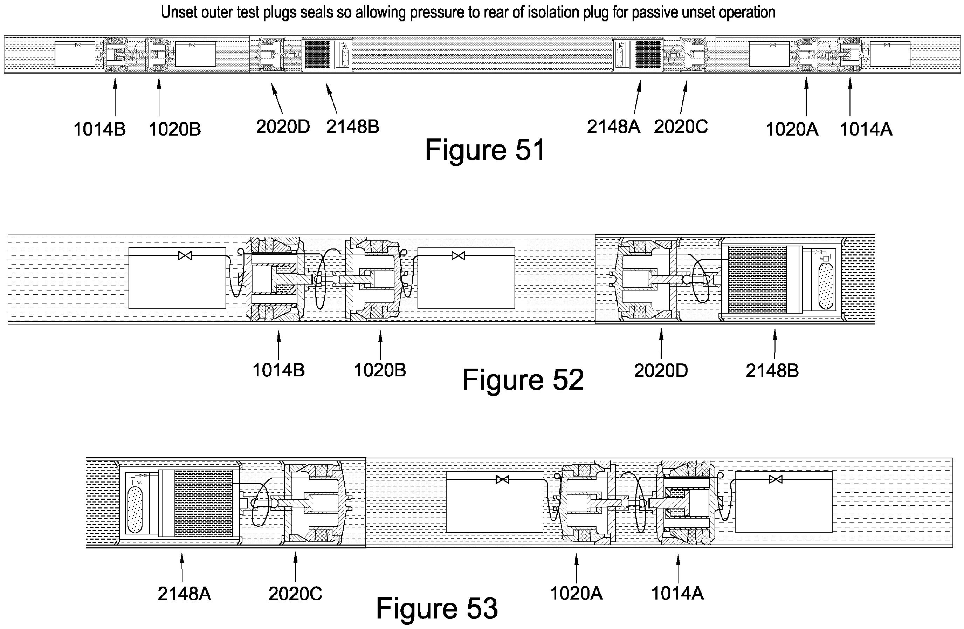

Figures 32 to 53 show a test tool assembly 2010 according to a third embodiment of the invention, the test tool assembly 2010 for use in the repair and testing of a mid line section of pipeline 2012 having a defect D.

In this embodiment, two accumulators 2148A, 2148B and two test plug modules 2020C, 2020D are pre-installed in the replacement pipe spool S (Figure 32). In the illustrated embodiment, the test plug modules 2020C, 2020D are of similar design to the test plug modules 1020A, 1020B described above. As shown, the test plug modules 2020C, 202D are pre-set with the seal elements 2088C, 2088D engaging the wall of the pipe spool S and the accumulators 2148A, 2148B are ported to allow each pipe joint to be pressurised without pressurising the whole pipe spool length. Beneficially, this arrangement can significantly reduce the test volume and so minimise the required accumulator volume.

The assembly 2010 is deployed to the location inside the pipeline 2012 by traditional means. This can be by pigging, pushing or towed by a crawler. In this embodiment, the assembly 2010 comprises two isolation plug modules 2014A, 2014B and two test plug modules 2020A, 2020B. The isolation plug module 2014A is coupled to test plug module 2020A. Isolation plug module 2014B is coupled to test plug module 2020B.

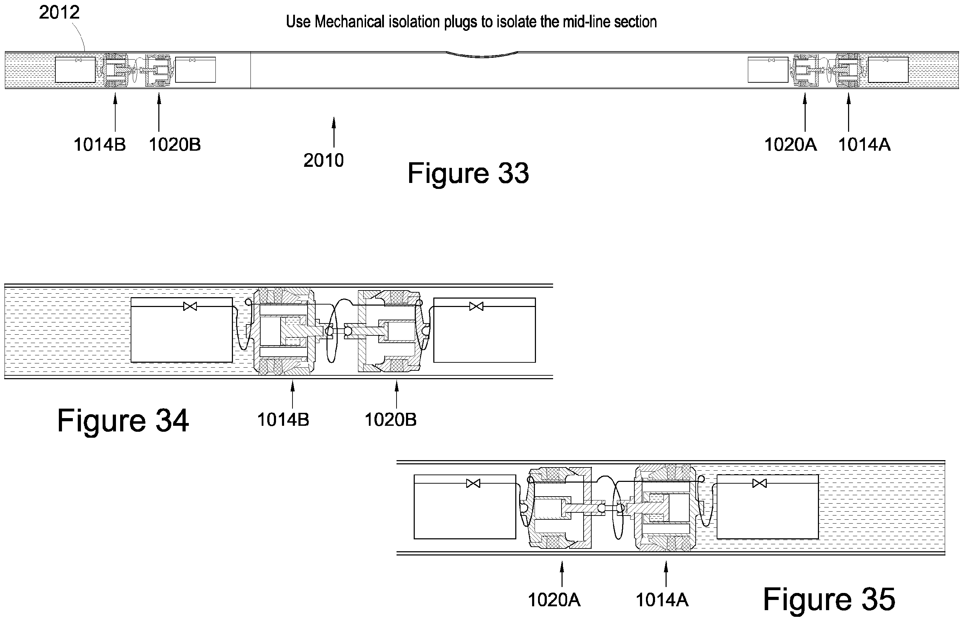

Isolation plug module 2014A and test plug module 2020A are first pigged to a location downstream of the defect D. Isolation plug module 2014B and test plug module 2020B are then pigged to a location upstream of the defect D. Once in position, the isolation plugs 2014A, 2014B are set and the pressure between the plugs vented (Figures 33 to 35). As the isolated section of the pipeline 2012 is to be removed, venting the pressure between the isolation plugs 2014A, 2014B may be performed by an external breach in the pipeline 2012, such as a hot tap penetration (not shown).

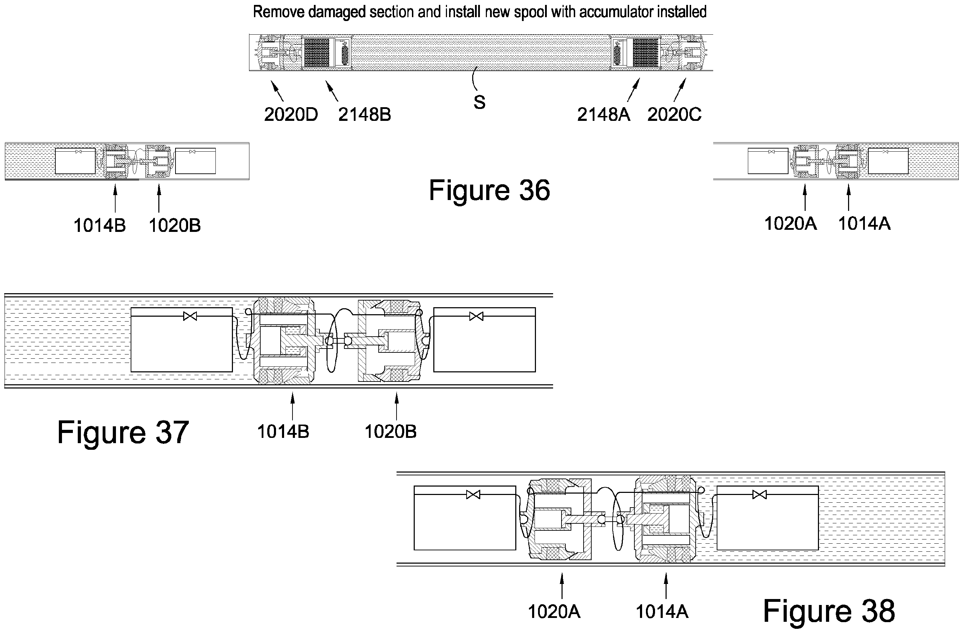

The damaged section of pipe can then be removed and replaced with the replacement pipe spool S with pre-installed accumulators 2148A, 2148B and test plug modules 2020C, 2020D, the pipe closure being made for example by welding or mechanical connector or other suitable means (Figures 36 to 41).

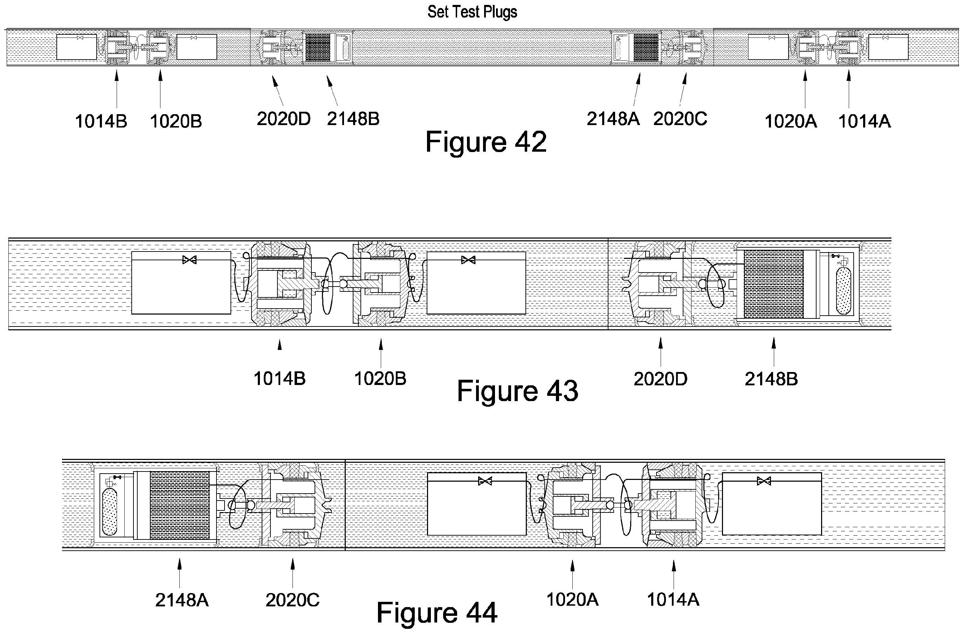

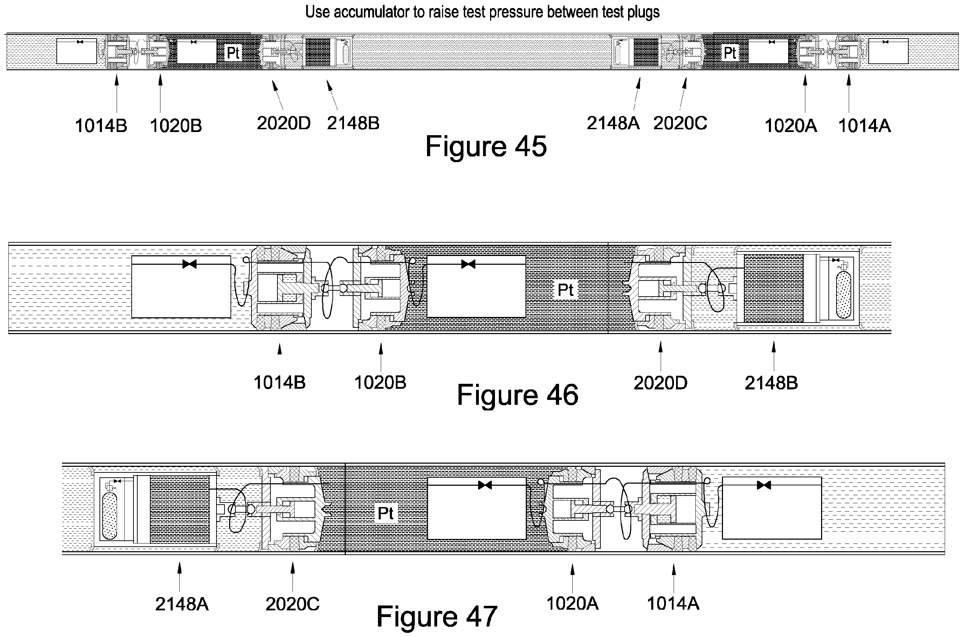

The seals 2088A, 2088B on the test plug modules 2020A, 2020b are then set as described above (Figures 42 to 44) and the pressure inside the test boundaries created by the test tool modules 2020A, 2020B,2020C,2020D can now be raised by the accumulators 2148A, 2148B (Figures 45 to 47).

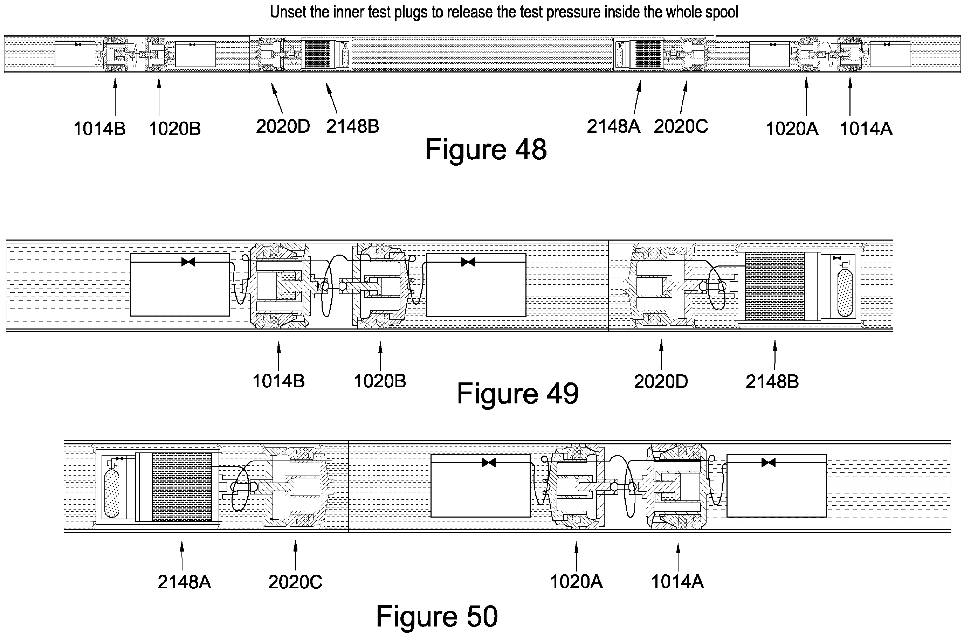

In this embodiment, upon completion of the test the test pressure Pt can be released by unsetting the inner test plug modules, that is test plug modules 2020C, 2020D, this releasing the test pressure Pt into the whole spool S (Figures 48 to 50). The outer test plug modules 2020A, 2020B may then be unset to release the test pressure Pt to act on the isolations plug modules 2014A, 2014B.

While embodiments of the invention may be particularly beneficial for use in pressure testing a mid-line repair, other embodiments may be used in pipe end pressure test applications.

The control system can be designed with a default time-out in case of loss of communication and the battery failure will result in seal release.

The opposing locks on the isolation and test plug modules are back to back so will retract radially when the supporting lock bowls are released. This can be performed actively by the hydraulic system or passively by internally mounted springs and pigging control.

It will also be understood that reference to the term pipe includes any tubular construction including an oil or gas pipeline, whether subsea, above or below ground, downhole tubing, or indeed any other tubular suitable for transport or storage of fluid.

## Claims

1. A method of pressure testing a pipe (12;1012;2012), comprising:
disposing a test tool assembly (10;1010;2010) in the pipe (12,1012,2012),
wherein the test tool assembly (10;1010;2010) comprises a test plug module (20;1020A;1020B;2020A;2020B;2020C;2020D) which comprises:
a lock arrangement (90;1090A;1090B) comprising:
a lock bowl (92); and
a plurality of tapered lock segments (94) disposed around the lock bowl (92) and configured to engage the lock bowl (92) and a wall (38) of the pipe (12;1012;2012);
a seal arrangement comprising a compression seal element (88; 1088A; 1088B;2088A;2088B);
a body (78) comprising:
a first body portion which forms an upstream end of the test plug module (20;1020A;1020B;2020A;2020B;2020C;2020D) and which defines an annular pressure head (80) of the test plug module (20;1020A;1020B;2020A;2020B;2020C;2020D); and
a second body portion which extends from the pressure head (80) and which defines a support core (82) of the test plug module (20; 1020A; 1020B;2020A;2020B;2020C;2020D),
wherein the compression seal element (88;1088A;1088B;2088A;2088B) is disposed on the second body portion,
wherein the lock arrangement (90;1090A;1090B) is disposed around the support core (82) at a downstream end thereof,
and wherein the lock bowl (92) is fixedly secured to the support core (82) such that the lock bowl (92) defines an abutment shoulder for the seal element (88; 1088A; 1088B;2088A;2088B);
a fluid activated seal activation arrangement comprising an annular piston (104) slidably disposed around the support core (82) and which defines a seal actuating piston of the test plug module (20;1020A;1020B;2020A;2020B) in use; and
a chamber (108) defined between the piston (104) and the support core (82) such that, in use, fluid supplied to the chamber (108) urges the piston (104) towards the compression seal element (88;1088A;1088B;2088A;2088B) to compress the compression seal element (88;1088A;1088B;2088A;2088B) into sealing engagement with the pipe (12,1012,2012);
engaging the lock arrangement (90) of the test tool assembly (10;1010;2010) with a wall (38) of the pipe (12;1012;2012) using a lock activation arrangement to secure the test tool assembly (10;1010;2010) in the pipe (12;1012;2012);
engaging the compression seal element (88;1088A;1088B;2088A;2088B) of the seal arrangement of the test tool assembly (10; 1010;2010) with the wall (38) of the pipe (12;1012;2012) using the piston (104) of the fluid activated seal activation arrangement to form a seal therebetween,
wherein the compression seal element expands in a radial direction to engage the wall (38) of the pipe (12;1012;2012),
wherein the fluid activated seal activation arrangement is independent of the lock activation arrangement; and
applying a test pressure (Pt) in the pipe (12;1012;2012),
wherein the piston (104) of the seal activation arrangement comprises an area upon which the test pressure (Pt) acts, such that the test pressure (Pt) acting on said area causes a compression force to be applied to the compression seal element (88;1088A;1088B;2088A;2088B),
and wherein said area defines a smaller area than the cross sectional area of the compression seal element (88,1088A,1088B,2088A,2088B) in the radial direction upon which the test pressure acts,
the test tool assembly (10;1010;2010) thus being configured so that in the event of loss of fluid supply to the seal activation chamber (108), the force acting on the piston (104) as a result of the test pressure (Pt) is lower than a force required to maintain the seal between the compression seal element (88;1088A;1088B;2088A;2088B) of the seal arrangement and the wall (38) of the pipe (12;1012;2012).

2. The method of claim 1, comprising setting the test tool assembly (10;1010;2010) by sequentially activating the lock arrangement (90;1090A;1090B) and then the seal arrangement (88;1088A; 1088B;2088A;2088B).

3. The method of claim 1 or 2, comprising moving the lock arrangement (90; 1090A;1090B) in a solely or substantially solely radial direction when engaging and disengaging from the pipe (12;1012;2012).

4. The method of any preceding claim, comprising disposing an isolation tool assembly (14;1014A;1014B;2014A;2014B) in the pipe (12;1012;2012) and activating the isolation tool assembly (14;1014A;1014B;2014A;2014B) to isolate a downstream section (18) of the pipe (12;1012;2012) from an upstream section (16) of the pipe (12;1012;2012).

5. The method of claim 4, wherein applying the test pressure (Pt) comprises raising the isolated downstream pressure.

6. The method of any preceding claim, comprising applying the test pressure (Pt) using an accumulator (148;1148;2148A;2148B).

7. The method of claim 6, comprising deploying the accumulator (148;1148;2148A;2148B) with the test tool assembly (10;1010;2010) and/or in a replacement pipe section (S).

8. The method of any preceding claim, comprising providing a bypass arrangement (136;1138A;1138B) permitting fluid bypass of the isolation tool assembly (14;1014A; 1014B;2014A;2014B).

9. A test tool assembly (10;1010;2010) for pressure testing a pipe (12;1012;2012), the test tool assembly (10;1010;2010) comprising:
a test plug module (20,1020A,1020B,2020A,2020B,2020C,2020D) comprising:
a lock arrangement (90;1090A;1090B) comprising:
a lock bowl (92); and
a plurality of tapered lock segments (94) disposed around the lock bowl (92) and configured to engage the lock bowl (92) and a wall (38) of a pipe (12;1012;2012) to secure the test tool assembly (10;1010;2010) in the pipe (12;1012;2012);
a lock activation arrangement (114) for activating the lock arrangement (90;1090a;1090B);
a seal arrangement comprising a compression seal element (88;1088A; 1088B;2088A;2088B)
a body (78) comprising:
a first body portion which forms an upstream end of the test plug module (20;1020A;1020B;2020A;2020B;2020C;2020D) and
which defines an annular pressure head (80) of the test plug module (20;1020A;1020B;2020A;2020B;2020C;2020D); and
a second body portion which extends from the pressure head (80) and which defines a support core (82) of the test plug module (20;1020A; 1020B;2020A;2020B;2020C;2020D);
wherein the compression seal element (88;1088A;1088B;2088A;2088B) is disposed on the second body portion,
wherein the lock arrangement (90;1090A;1090B) is disposed around the support core (82) at a downstream end thereof,
and wherein the lock bowl (92) is fixedly secured to the support core (82) such that the lock bowl (92) defines an abutment shoulder for the seal element (88;1088A;1088B;2088A;2088B);
a fluid activated seal activation arrangement for activating the seal arrangement, comprising an annular piston (104) slidably disposed around the support core (82) and which defines a seal actuating piston of the test plug module (20;1020A;1020B;2020A;2020B;2020C; 2020D) in use; and
a chamber (108) defined between the piston (104) and the support core (82) such that, in use, fluid supplied to the chamber (108) urges the piston (104) towards the compression seal element (88;1088A;1088B;2088A;2088B) to compress the seal element (88;1088A;1088B;2088A;2088B) into sealing engagement with the pipe (12;1012;2012),
wherein the compression seal element (88;1088A;1088B;2088A;2088B) is expandable in a radial direction to engage the wall (38) of the pipe (12;1012;2012),
wherein the seal activation arrangement is independent of the lock activation arrangement (114); and
wherein the piston (104) of the seal activation arrangement comprises an area upon which the test pressure (Pt) acts, such that a test pressure (Pt) acting on said area causes a compression force to be applied to the compression seal element (88;1088A;1088B;2088A;2088B), and wherein said area defines a smaller area than the cross sectional area of the compression seal element (88;1088A;1088B;2088A;2088B) in the radial direction upon which the test pressure acts,
the test tool assembly (10;1010;2010) thus being configured so that in the event of loss of fluid supply to the seal activation chamber (108), the force acting on the piston (104) as a result of a test pressure (Pt) applied in the pipe (12;1012;2012) is lower than a force required to maintain the seal between the compression seal element (88;1088A;1088B;2088A; 2088B) of the seal arrangement (88;1088A,1088B,2088A,2088B) and the wall (38) of the pipe (12;1012;2012).

10. The assembly (10;1010;2010) of claim 9, wherein at least one of:
the test tool assembly (10;1010;2010) is configured so that the lock arrangement (90;1090A;1090B) moves in a solely or substantially solely radial direction when engaging and disengaging from the pipe (12;1012;2012);
the lock activation arrangement comprises an annular compression flange (122), the compression flange (122) comprising a guide surface (124) which guides the lock arrangement (90;1090A;1090B) radially to engage the pipe wall (38);
the lock arrangement (90;1090A;1090B) is configured so that the contact area between the lock arrangement (90;1090A;1090B) and the pipe (12;1012;2012) limits the transfer of force from the test pressure (Pt) to the pipe (12;1012;2012), a larger contact area decreasing the load applied to the pipe (12;1012;2012);
the lock arrangement (90;1090A;1090B) is configured with a high taper angle.

11. The assembly (10;1010;2010) of claim 9 or 10, wherein the test tool assembly (10;1010;2010) comprises or is operatively associated with an isolation tool assembly (14;1014A;1014B;2014A;2014B), the isolation tool assembly (14;1014A;1014B;2014A;2014B) comprising a seal arrangement (32,34) configured to isolate a section of the pipe (12;1012;2012).

12. The assembly (10;1010;2010) of any one of claims 9, 10 or 11, comprising at least one of:
a bypass arrangement (136;1138A;1138B);
a bypass arrangement (136;1138A;1138B) wherein the bypass arrangement (136;1138A;1138B) comprises at least one of:
a first control module (138);
a first control module (138) configured to communicate with an upstream pipe section (16);
a second control module (140);
a second control module (140) configured to communicate with a downstream pipe section (18);
a flow line (146).

13. The assembly (10;1010;2010) of claim 12 when dependent on claim 11, wherein the seal arrangement (32,34) of the isolation tool assembly (14;1014A;1014B;2014A; 2014B) comprises an annulus (40), and wherein at least one of
the first control module (138) and the second module (140) are configured to communicate with the annulus (40).

14. The assembly (10;1010;2010) of any one of claims 9 to 13, comprising an accumulator (148;1148;2148A;2148B) for applying the test pressure (Pt) in the pipe (12;1012;2012).

## Patentansprüche

1. Verfahren zur Druckprüfung eines Rohrs (12; 1012; 2012), umfassend:
Anordnen einer Prüfwerkzeug-Baugruppe (10; 1010; 2010) in dem Rohr (12; 1012; 2012), wobei die Prüfwerkzeug-Baugruppe (10; 1010; 2010) ein Prüfstopfenmodul (20; 1020A; 1020B; 2020A; 2020B; 2020C; 2020D) umfasst, welches umfasst:
eine Schleusenanordnung (90; 1090A; 1090B), umfassend:
eine Schleusenschale (92); und
eine Vielzahl von verjüngten Schleusensegmenten (94), die um die Schleusenschale (92) herum angeordnet und dafür konfiguriert sind, mit der Schleusenschale (92) und einer Wand (38) des Rohrs (12; 1012; 2012) in Eingriff zu kommen,
eine Dichtungsanordnung, die ein Kompressionsdichtungselement (88; 1088A; 1088B; 2088A; 2088B) umfasst,
einen Körper (78), welcher umfasst:
einen ersten Körperabschnitt, der ein stromaufwärtsseitiges Ende des Prüfstopfenmoduls (20; 1020A; 1020B; 2020A; 2020B; 2020C; 2020D) bildet und der einen ringförmigen Druckkopf (80) des Prüfstopfenmoduls (20; 1020A; 1020B; 2020A; 2020B; 2020C; 2020D) definiert; und
einen zweiten Körperabschnitt, der sich von dem Druckkopf (80) erstreckt und der einen Stützkern (82) des Prüfstopfenmoduls (20; 1020A; 1020B; 2020A; 2020B; 2020C; 2020D) definiert,
wobei das Kompressionsdichtungselement (88; 1088A; 1088B; 2088A; 2088B) auf dem zweiten Körperabschnitt angeordnet ist,
wobei die Schleusenanordnung (90; 1090A; 1090B) um den Stützkern (82) herum an einem stromabwärtsseitigen Ende desselben angeordnet ist,
und wobei die Schleusenschale (92) fest an dem Stützkern (82) befestigt ist, sodass die Schleusenschale (92) eine Widerlagerschulter für das Dichtungselement (88; 1088A; 1088B; 2088A; 2088B) definiert;
eine fluidaktivierte Dichtungsaktivierungsanordnung, die einen Ringkolben (104) umfasst, der verschiebbar um den Stützkern (82) herum angeordnet ist und der im Gebrauch einen Dichtungsbetätigungskolben des Prüfstopfenmoduls (20; 1020A; 1020B; 2020A; 2020B) definiert; und
eine Kammer (108), die zwischen dem Kolben (104) und dem Stützkern (82) definiert ist, sodass im Gebrauch ein der Kammer (108) zugeführtes Fluid den Kolben (104) in Richtung des Kompressionsdichtungselements (88; 1088A; 1088B; 2088A; 2088B) drängt, um das Kompressionsdichtungselement (88; 1088A; 1088B; 2088A; 2088B) in dichtenden Eingriff mit dem Rohr (12, 1012, 2012) zu drücken;
Ineingriffbringen der Schleusenanordnung (90) der Prüfwerkzeug-Baugruppe (10; 1010; 2010) mit einer Wand (38) des Rohrs (12; 1012; 2012) unter Verwendung einer Schleusenaktivierungsanordnung, um die Prüfwerkzeug-Baugruppe (10; 1010; 2010) in dem Rohr (12; 1012; 2012) zu befestigen;
Ineingriffbringen des Kompressionsdichtungselements (88; 1088A; 1088B; 2088A; 2088B) der Dichtungsanordnung der Prüfwerkzeug-Baugruppe (10; 1010; 2010) mit der Wand (38) des Rohrs (12; 1012; 2012) unter Verwendung des Kolbens (104) der fluidaktivierten Dichtungsaktivierungsanordnung, um dazwischen eine Dichtung zu bilden,
wobei sich das Kompressionsdichtungselement in einer radialen Richtung ausdehnt, um mit der Wand (38) des Rohrs (12; 1012; 2012) in Eingriff zu kommen,
wobei die fluidaktivierte Dichtungsaktivierungsanordnung unabhängig von der Schleusenaktivierungsanordnung ist; und
Aufbringen eines Prüfdrucks (Pt) in dem Rohr (12; 1012; 2012),
wobei der Kolben (104) der Dichtungsaktivierungsanordnung eine Fläche umfasst, auf die der Prüfdruck (Pt) wirkt, sodass der auf die Fläche wirkende Prüfdruck (Pt) bewirkt, dass auf das Kompressionsdichtungselement (88; 1088A; 1088B; 2088A; 2088B) eine Kompressionskraft ausgeübt wird,
und wobei die Fläche eine kleinere Fläche als die Querschnittsfläche des Kompressionsdichtungselements (88; 1088A; 1088B; 2088A; 2088B) in der radialen Richtung definiert, auf die der Prüfdruck wirkt,
wobei die Prüfwerkzeug-Baugruppe (10; 1010; 2010) folglich so konfiguriert ist, dass im Fall des Verlusts der Fluidzufuhr zu der Dichtungsaktivierungskammer (108) die Kraft, die infolge des Prüfdrucks (Pt) auf den Kolben (104) wirkt, geringer ist als eine Kraft, die erforderlich ist, um die Dichtung zwischen dem Kompressionsdichtungselement (88; 1088A; 1088B; 2088A; 2088B) der Dichtungsanordnung und der Wand (38) des Rohrs (12; 1012; 2012) aufrecht zu erhalten.

2. Verfahren nach Anspruch 1, umfassend: Einstellen der Prüfwerkzeug-Baugruppe (10; 1010; 2010) durch nacheinander erfolgendes Aktivieren der Schleusenanordnung (90; 1090A; 1090B) und dann der Dichtungsanordnung (88; 1088A; 1088B; 2088A; 2088B).

3. Verfahren nach Anspruch 1 oder 2, umfassend: Bewegen der Schleusenanordnung (90; 1090A; 1090B) in einer ausschließlich oder im Wesentlichen ausschließlich radialen Richtung, wenn sie mit dem Rohr (12; 1012; 2012) in Eingriff gebracht oder aus dem Eingriff gelöst wird.

4. Verfahren nach einem der vorhergehenden Ansprüche, umfassend: Anordnen einer Isolationswerkzeug-Baugruppe (14; 1014A; 1014B; 2014A; 2014B) in dem Rohr (12; 1012; 2012) und das Aktivieren der Isolationswerkzeug-Baugruppe (14; 1014A; 1014B; 2014A; 2014B), um einen stromabwärtsseitigen Abschnitt (18) des Rohrs (12; 1012; 2012) von einem stromaufwärtsseitigen Abschnitt (16) des Rohrs (12; 1012; 2012) zu isolieren.

5. Verfahren nach Anspruch 4, wobei das Aufbringen des Prüfdrucks (Pt) umfasst: Erhöhen des isolierten stromabwärtsseitigen Drucks.

6. Verfahren nach einem der vorhergehenden Ansprüche, umfassend: Aufbringen des Prüfdrucks (Pt) unter Verwendung eines Druckspeichers (148; 1148; 2148A; 2148B).

7. Verfahren nach Anspruch 6, umfassend: Einsetzen des Druckspeichers (148; 1148; 2148A; 2148B) mit der Prüfwerkzeug-Baugruppe (10; 1010; 2010) und/oder in einem Ersatzrohrabschnitt (S).

8. Verfahren nach einem der vorhergehenden Ansprüche, umfassend: Bereitstellen einer Umleitungsanordnung (136; 1138A; 1138B), die eine Fluid-Umleitung der Isolationswerkzeug-Baugruppe (14; 1014A; 1014B; 2014A; 2014B) ermöglicht.

9. Prüfwerkzeug-Baugruppe (10; 1010; 2010) zur Druckprüfung eines Rohrs (12; 1012; 2012), wobei die Prüfwerkzeug-Baugruppe (10; 1010; 2010) umfasst:
ein Prüfstopfen-Modul (20, 1020A, 1020B, 2020A, 2020B, 2020C, 2020D), umfassend:
eine Schleusenanordnung (90; 1090A; 1090B), umfassend:
eine Schleusenschale (92); und
eine Vielzahl von verjüngten Schleusensegmenten (94), die um die Schleusenschale (92) herum angeordnet und dafür konfiguriert sind, mit der Schleusenschale (92) und einer Wand (38) eines Rohrs (12; 1012; 2012) in Eingriff zu kommen, um die PrüfwerkzeugBaugruppe (10; 1010; 2010) in dem Rohr (12; 1012; 2012) zu befestigen;
eine Schleusenaktivierungsanordnung (114) zum Aktivieren der Schleusenanordnung (90; 1090a; 1090B);
eine Dichtungsanordnung, die ein Kompressionsdichtungselement (88; 1088A; 1088B; 2088A; 2088B) umfasst,
einen Körper (78), umfassend:
einen ersten Körperabschnitt, der ein stromaufwärtsseitiges Ende des Prüfstopfenmoduls (20; 1020A; 1020B; 2020A; 2020B; 2020C; 2020D) bildet und der einen ringförmigen Druckkopf (80) des Prüfstopfenmoduls (20; 1020A; 1020B; 2020A; 2020B; 2020C; 2020D) definiert; und
einen zweiten Körperabschnitt, der sich von dem Druckkopf (80) erstreckt und der einen Stützkern (82) des Prüfstopfenmoduls (20; 1020A; 1020B; 2020A; 2020B; 2020C; 2020D) definiert;
wobei das Kompressionsdichtungselement (88; 1088A; 1088B; 2088A; 2088B) an dem zweiten Körperabschnitt angeordnet ist,
wobei die Schleusenanordnung (90; 1090A; 1090B) um den Stützkern (82) herum an einem stromabwärtsseitigen Ende desselben angeordnet ist,
und wobei die Schleusenschale (92) fest an dem Stützkern (82) befestigt ist, sodass die Schleusenschale (92) eine Widerlagerschulter für das Dichtungselement (88; 1088A; 1088B; 2088A; 2088B) definiert;
eine fluidaktivierte Dichtungsaktivierungsanordnung zum Aktivieren der Dichtungsanordnung, umfassend einen Ringkolben (104), der verschiebbar um den Stützkern (82) herum angeordnet ist und der im Gebrauch einen Dichtungsbetätigungskolben des Prüfstopfenmoduls (20; 1020A; 1020B; 2020A; 2020B; 2020C; 2020D) definiert; und
eine Kammer (108), die zwischen dem Kolben (104) und dem Stützkern (82) definiert ist, sodass im Gebrauch ein der Kammer (108) zugeführtes Fluid den Kolben (104) in Richtung des Kompressionsdichtungselements (88; 1088A; 1088B; 2088A; 2088B) drängt, um das Dichtungselement (88; 1088A; 1088B; 2088A; 2088B) in dichtenden Eingriff mit dem Rohr (12, 1012, 2012) zu drücken;
wobei das Kompressionsdichtungselement (88; 1088A; 1088B; 2088A; 2088B) in einer radialen Richtung ausdehnbar ist, um mit der Wand (38) des Rohrs (12; 1012; 2012) in Eingriff zu kommen,
wobei die Dichtungsaktivierungsanordnung unabhängig von der Schleusenaktivierungsanordnung (114) ist; und
wobei der Kolben (104) der Dichtungsaktivierungsanordnung eine Fläche umfasst, auf die der Prüfdruck (Pt) wirkt, sodass ein auf die Fläche wirkender Prüfdruck (Pt) bewirkt, dass auf das Kompressionsdichtungselement (88; 1088A; 1088B; 2088A; 2088B) eine Kompressionskraft ausgeübt wird, und wobei die Fläche eine kleinere Fläche als die Querschnittsfläche des Kompressionsdichtungselements (88; 1088A; 1088B; 2088A; 2088B) in der radialen Richtung definiert, auf die der Prüfdruck wirkt,
wobei die Prüfwerkzeug-Baugruppe (10; 1010; 2010) folglich so konfiguriert ist, dass im Fall des Verlusts der Fluidzufuhr zu der Dichtungsaktivierungskammer (108) die Kraft, die infolge eines in dem Rohr aufgebrachten (12; 1012; 2012).Prüfdrucks (Pt) auf den Kolben (104) wirkt, geringer ist als eine Kraft, die erforderlich ist, um die Dichtung zwischen dem Kompressionsdichtungselement (88; 1088A; 1088B; 2088A; 2088B) der Dichtungsanordnung (88; 1088A; 1088B; 2088A; 2088B) und der Wand (38) des Rohrs (12; 1012; 2012) aufrecht zu erhalten.

10. Baugruppe (10; 1010; 2010) nach Anspruch 9, wobei mindestens eines von Folgendem gilt:
die Prüfwerkzeug-Baugruppe (10; 1010; 2010) ist so konfiguriert, dass die Schleusenanordnung (90; 1090A; 1090B) sich in einer ausschließlich oder im Wesentlichen ausschließlich radialen Richtung bewegt, wenn sie mit dem Rohr (12; 1012; 2012) in Eingriff gebracht und aus dem Eingriff gelöst wird,
die Schleusenaktivierungsanordnung umfasst einen ringförmigen Druckflansch (122), wobei der Druckflansch (122) eine Führungsfläche (124) umfasst, welche die Schleusenanordnung (90; 1090A; 1090B) radial führt, um mit der Rohrwand (38) in Eingriff zu kommen,
die Schleusenanordnung (90; 1090A; 1090B) ist so konfiguriert, dass die Kontaktfläche zwischen der Schleusenanordnung (90; 1090A; 1090B) und dem Rohr (12; 1012; 2012) die Übertragung von Kraft vom Prüfdruck (Pt) auf das Rohr (12; 1012; 2012) begrenzt, wobei eine größere Kontaktfläche die auf das Rohr (12; 1012; 2012) aufgebrachte Last verringert;
die Schleusenanordnung (90; 1090A; 1090B) ist mit einem hohen Kegelwinkel konfiguriert.

11. Baugruppe (10; 1010; 2010) nach Anspruch 9 oder 10, wobei die Prüfwerkzeugbaugruppe (10; 1010; 2010) eine Isolationswerkzeug-Baugruppe (14; 1014A; 1014B; 2014A; 2014B) umfasst oder mit dieser betrieblich assoziiert ist, wobei die Isolationswerkzeug-Baugruppe (14; 1014A; 1014B; 2014A; 2014B) eine Dichtungsanordnung (32, 34) umfasst, die dafür konfiguriert ist, einen Abschnitt des Rohrs (12; 1012; 2012) zu isolieren.

12. Baugruppe (10; 1010; 2010) nach einem der Ansprüche 9, 10 oder 11, umfassend mindestens eines von:
einer Umleitungsanordnung (136; 1138A; 1138B);
einer Umleitungsanordnung (136; 1138A; 1138B), wobei die Umleitungsanordnung (136; 1138A; 1138B) mindestens eines von Folgendem umfasst:
ein erstes Steuerungsmodul (138);
ein erstes Steuerungsmodul (138), das dafür konfiguriert ist, mit einem stromaufwärtsseitigen Rohrabschnitt (16) zu kommunizieren;
ein zweites Steuerungsmodul (140);
ein zweites Steuerungsmodul (140), das dafür konfiguriert ist, mit einem stromabwärtsseitigen Rohrabschnitt (18) zu kommunizieren;
eine Durchflussleitung (146).

13. Baugruppe (10; 1010; 2010) nach Anspruch 12, wenn von Anspruch 11 abhängig, wobei die Dichtungsanordnung (32, 34) der Isolationswerkzeug-Baugruppe (14; 1014A; 1014B; 2014A; 20148) einen Ringraum (40) umfasst und wobei mindestens eines des ersten Steuerungsmoduls (138) und des zweiten Moduls (140) dafür konfiguriert ist, mit dem Ringraum (40) zu kommunizieren.

14. Baugruppe (10; 1010; 2010) nach einem der Ansprüche 9 bis 13, umfassend einen Speicher (148; 1148; 2148A; 2148B) zum Aufbringen des Prüfdrucks (Pt) in dem Rohr (12; 1012; 2012).

## Revendications

1. Procédé de test de pression d'un tuyau (12 ; 1012 ; 2012), comprenant les étapes consistant à :
disposer un ensemble d'outils de test (10 ; 1010 ; 2010) dans le tuyau (12 ; 1012 ; 2012), dans lequel l'ensemble d'outils de test (10 ; 1010 ; 2010) comprend un module de bouchon de test (20 ; 1020A ; 1020B ; 2020A ; 2020B ; 2020C ; 2020D) qui comprend :
un dispositif de verrouillage (90 ; 1090A ; 1090B) comprenant :
un bol de verrouillage (92) ; et
une pluralité de segments de verrouillage coniques (94) disposés autour du bol de verrouillage (92) et configurés pour entrer en prise avec le bol de verrouillage (92) et une paroi (38) du tuyau (12 ; 1012 ; 2012) ;
un dispositif d'étanchéité comprenant un élément d'étanchéité par compression (88 ; 1088A ; 1088B ; 2088A ; 2088B) ;
un corps (78) comprenant :
une première partie de corps qui forme une extrémité amont du module de bouchon de test (20 ; 1020A ; 1020B ; 2020A ; 2020B ; 2020C ; 2020D) et qui définit une tête de pression (80) annulaire du module de bouchon de test (20 ; 1020A ; 1020B ; 2020A ; 2020B ; 2020C ; 2020D) ; et
une deuxième partie de corps qui s'étend à partir de la tête de pression (80) et qui définit un noyau de support (82) du module de bouchon de test (20 ; 1020A ; 1020B ; 2020A ; 2020B ; 2020C ; 2020D),
dans lequel l'élément d'étanchéité par compression (88 ; 1088A ; 1088B ; 2088A ; 2088B) est disposé sur la deuxième partie de corps,
dans lequel le dispositif de verrouillage (90 ; 1090A ; 1090B) est disposé autour du noyau de support (82) à une extrémité aval de celui-ci,
et dans lequel le bol de verrouillage (92) est fixé de manière fixe au noyau de support (82) de sorte que le bol de verrouillage (92) définit un épaulement de butée pour l'élément d'étanchéité (88 ; 1088A ; 1088B ; 2088A ; 2088B) ;
un dispositif d'activation de l'étanchéité activé par un fluide comprenant un piston (104) annulaire disposé de manière coulissante autour du noyau de support (82) et qui définit un piston d'actionnement du joint du module de bouchon de test (20 ; 1020A ; 1020B ; 2020A ; 2020B) en cours d'utilisation ; et
une chambre (108) définie entre le piston (104) et le noyau de support (82) de sorte que, en cours d'utilisation, le fluide fourni à la chambre (108) pousse le piston (104) vers l'élément d'étanchéité par compression (88 ; 1088A ; 1088B ; 2088A ; 2088B) pour comprimer l'élément d'étanchéité par compression (88 ; 1088A ; 1088B ; 2088A ; 2088B) en prise étanche avec le tuyau (12 ; 1012 ; 2012) ;
faire entrer en prise le dispositif de verrouillage (90) de l'ensemble d'outils de test (10 ; 1010 ; 2010) avec une paroi (38) du tuyau (12 ; 1012 ; 2012) à l'aide d'un dispositif d'activation de verrouillage pour fixer l'ensemble d'outils de test (10 ; 1010 ; 2010) dans le tuyau (12; 1012 ; 2012) ;
faire entrer en prise l'élément d'étanchéité par compression (88 ; 1088A ; 1088B ; 2088A ; 2088B) du dispositif d'étanchéité de l'ensemble d'outils de test (10 ; 1010 ; 2010) avec la paroi (38) du tuyau (12 ; 1012 ; 2012) à l'aide du piston (104) du dispositif d'activation de l'étanchéité activé par un fluide pour former un joint entre ceux-ci,
dans lequel l'élément d'étanchéité par compression se dilate dans une direction radiale pour entrer en prise avec la paroi (38) du tuyau (12 ; 1012 ; 2012),
dans lequel le dispositif d'activation de l'étanchéité activé par un fluide est indépendant du dispositif d'activation de verrouillage ; et
appliquer une pression test (Pt) dans le tuyau (12 ; 1012 ; 2012),
dans lequel le piston (104) du dispositif d'activation de l'étanchéité comprend une zone sur laquelle la pression test (Pt) agit, de sorte que la pression test (Pt) agissant sur ladite zone provoque l'application d'une force de compression sur l'élément d'étanchéité par compression (88 ; 1088A ; 1088B ; 2088A ; 2088B),
et dans lequel ladite zone est plus petite que la section transversale de l'élément d'étanchéité par compression (88 ; 1088A; 1088B ; 2088A ; 2088B) dans la direction radiale sur laquelle la pression test agit,
l'ensemble d'outils de test (10 ; 1010 ; 2010) étant ainsi configuré pour qu'en cas de perte d'alimentation en fluide de la chambre (108) d'activation de l'étanchéité, la force agissant sur le piston (104) du fait de la pression test (Pt) soit inférieure à une force nécessaire pour maintenir l'étanchéité entre l'élément d'étanchéité par compression (88 ; 1088A ; 1088B ; 2088A ; 2088B) du dispositif d'étanchéité et la paroi (38) du tuyau (12 ; 1012 ; 2012).

2. Procédé selon la revendication 1, comprenant la mise en place de l'ensemble d'outils de test (10 ; 1010 ; 2010) en activant séquentiellement le dispositif de verrouillage (90 ; 1090A ; 1090B) et ensuite le dispositif d'étanchéité (88 ; 1088A ; 1088B ; 2088A ; 2088B).

3. Procédé selon la revendication 1 ou 2, comprenant le déplacement du dispositif de verrouillage (90; 1090A; 1090B) dans une direction uniquement ou sensiblement uniquement radiale lors de sa mise en prise avec le tuyau (12 ; 1012 ; 2012) et de son désengagement de celui-ci.

4. Procédé selon l'une quelconque des revendications précédentes, comprenant la disposition d'un ensemble d'outils d'isolation (14 ; 1014A ; 1014B ; 2014A ; 2014B) dans le tuyau (12 ; 1012 ; 2012) et l'activation de l'ensemble d'outils d'isolation (14 ; 1014A ; 1014B ; 2014A ; 2014B) pour isoler une section en aval (18) du tuyau (12 ; 1012 ; 2012) d'une section en amont (16) du tuyau (12 ; 1012 ; 2012).

5. Procédé selon la revendication 4, dans lequel l'application de la pression test (Pt) comprend l'augmentation de la pression aval isolée.

6. Procédé selon l'une quelconque des revendications précédentes, comprenant l'application de la pression test (Pt) à l'aide d'un accumulateur (148 ; 1148 ; 2148A; 2148B).

7. Procédé selon la revendication 6, comprenant le déploiement de l'accumulateur (148 ; 1148 ; 2148A ; 2148B) avec l'ensemble d'outils de test (10 ; 1010 ; 2010) et/ou dans une section de tuyau de remplacement (S).

8. Procédé selon l'une quelconque des revendications précédentes, comprenant la fourniture d'un dispositif de dérivation (136 ; 1138A ; 1138B) permettant une dérivation de fluide de l'ensemble d'outils d'isolation (14 ; 1014A ; 1014B ; 2014A ; 2014B).

9. Ensemble d'outils de test (10 ; 1010 ; 2010) pour tester la pression d'un tuyau (12 ; 1012 ; 2012), l'ensemble d'outils de test (10 ; 1010 ; 2010) comprenant :
un module de bouchon de test (20 ; 1020A ; 1020B ; 2020A ; 2020B ; 2020C ; 2020D) comprenant :
un dispositif de verrouillage (90 ; 1090A ; 1090B) comprenant :
un bol de verrouillage (92) ; et
une pluralité de segments de verrouillage coniques (94) disposés autour du bol de verrouillage (92) et configurés pour entrer en prise avec le bol de verrouillage (92) et une paroi (38) d'un tuyau (12 ; 1012 ; 2012) pour fixer l'ensemble d'outils de test (10 ; 1010 ; 2010) dans le tuyau (12 ; 1012 ; 2012) ;
un dispositif d'activation de verrouillage (114) pour activer le dispositif de verrouillage (90 ; 1090A ; 1090B) ;
un dispositif d'étanchéité comprenant un élément d'étanchéité par compression (88 ; 1088A ; 1088B ; 2088A ; 2088B)
un corps (78) comprenant :
une première partie de corps qui forme une extrémité amont du module de bouchon de test (20 ; 1020A ; 1020B ; 2020A ; 2020B ; 2020C ; 2020D) et qui définit une tête de pression (80) annulaire du module de bouchon de test (20 ; 1020A ; 1020B ; 2020A ; 2020B ; 2020C ; 2020D) ; et
une deuxième partie de corps qui s'étend à partir de la tête de pression (80) et qui définit un noyau de support (82) du module de bouchon de test (20 ; 1020A ; 1020B ; 2020A ; 2020B ; 2020C ; 2020D) ;
dans lequel l'élément d'étanchéité par compression (88 ; 1088A ; 1088B ; 2088A ; 2088B) est disposé sur la deuxième partie de corps,
dans lequel le dispositif de verrouillage (90 ; 1090A ; 1090B) est disposé autour du noyau de support (82) à une extrémité aval de celui-ci,
et dans lequel le bol de verrouillage (92) est fixé de manière fixe au noyau de support (82) de sorte que le bol de verrouillage (92) définit un épaulement de butée pour l'élément d'étanchéité (88 ; 1088A ; 1088B ; 2088A ; 2088B) ;
un dispositif d'activation de l'étanchéité activé par un fluide pour activer le dispositif d'étanchéité, comprenant un piston (104) annulaire disposé de manière coulissante autour du noyau de support (82) et qui définit un piston d'actionnement du joint du module de bouchon de test (20 ; 1020A ; 1020B ; 2020A ; 2020B ; 2020C ; 2020D) en cours d'utilisation ; et
une chambre (108) définie entre le piston (104) et le noyau de support (82) de sorte que, en cours d'utilisation, un fluide fourni à la chambre (108) pousse le piston (104) vers l'élément d'étanchéité par compression (88 ; 1088A ; 1088B ; 2088A ; 2088B) pour comprimer l'élément d'étanchéité (88 ; 1088A ; 1088B ; 2088A ; 2088B) en prise étanche avec le tuyau (12 ; 1012 ; 2012),
dans lequel l'élément d'étanchéité par compression (88 ; 1088A ; 1088B ; 2088A ; 2088B) est extensible dans une direction radiale pour entrer en prise avec la paroi (38) du tuyau (12 ; 1012 ; 2012),
dans lequel le dispositif d'activation de l'étanchéité est indépendant du dispositif d'activation de verrouillage (114) ; et
dans lequel le piston (104) du dispositif d'activation de l'étanchéité comprend une zone sur laquelle la pression test (Pt) agit, de sorte qu'une pression test (Pt) agissant sur ladite zone entraîne l'application d'une force de compression à l'élément d'étanchéité par compression (88 ; 1088A ; 1088B ; 2088A ; 2088B), et dans lequel ladite zone définit une surface plus petite que la surface de section transversale de l'élément d'étanchéité par compression (88 ; 1088A ; 1088B ; 2088A ; 2088B) dans la direction radiale sur laquelle la pression test agit,
l'ensemble d'outils de test (10 ; 1010 ; 2010) est ainsi configuré pour qu'en cas de perte d'alimentation en fluide de la chambre (108) d'activation de l'étanchéité, la force agissant sur le piston (104) à la suite d'une pression test (Pt) appliquée dans le tuyau (12 ; 1012 ; 2012) soit inférieure à une force nécessaire pour maintenir l'étanchéité entre l'élément d'étanchéité par compression (88 ; 1088A ; 1088B ; 2088A ; 2088B) du dispositif d'étanchéité (88 ; 1088A ; 1088B ; 2088A ; 2088B) et la paroi (38) du tuyau (12 ; 1012 ; 2012).

10. Ensemble (10 ; 1010 ; 2010) selon la revendication 9, dans lequel au moins l'un des cas suivants s'applique :
l'ensemble d'outils de test (10 ; 1010 ; 2010) est configuré de manière à ce que le dispositif de verrouillage (90 ; 1090A ; 1090B) se déplace dans une direction uniquement ou sensiblement uniquement radiale lors de la mise en prise et du désengagement du tuyau (12; 1012 ; 2012) ;
le dispositif d'activation de verrouillage comprend une bride de compression (122) annulaire, la bride de compression (122) comprenant une surface de guidage (124) qui guide le dispositif de verrouillage (90 ; 1090A ; 1090B) radialement pour entrer en prise avec la paroi (38) de tuyau ;
le dispositif de verrouillage (90 ; 1090A ; 1090B) est configuré de telle sorte que la zone de contact entre le dispositif de verrouillage (90 ; 1090A ; 1090B) et le tuyau (12 ; 1012 ; 2012) limite le transfert de force de la pression test (Pt) au tuyau (12 ; 1012 ; 2012), une plus grande zone de contact diminuant la charge appliquée au tuyau (12 ; 1012 ; 2012) ;
le dispositif de verrouillage (90 ; 1090A ; 1090B) est configuré avec un angle de conicité élevé.

11. Ensemble (10 ; 1010 ; 2010) selon la revendication 9 ou 10, dans lequel l'ensemble d'outils de test (10 ; 1010 ; 2010) comprend ou est associé de manière opérationnelle à un ensemble d'outils d'isolation (14 ; 1014A ; 1014B ; 2014A ; 2014B), l'ensemble d'outils d'isolation (14 ; 1014A ; 1014B ; 2014A ; 2014B) comprenant un dispositif d'étanchéité (32, 34) configuré pour isoler une section du tuyau (12 ; 1012 ; 2012).

12. Ensemble (10 ; 1010 ; 2010) selon l'une quelconque des revendications 9, 10 ou 11, comprenant au moins l'un des éléments suivants :
un dispositif de dérivation (136 ; 1138A ; 1138B) ;
un dispositif de dérivation (136 ; 1138A; 1138B) dans lequel le dispositif de dérivation (136 ; 1138A ; 1138B) comprend au moins l'un des éléments suivants :
un premier module de commande (138) ;
un premier module de commande (138) configuré pour communiquer avec une section de tuyau en amont (16) ;
un deuxième module de commande (140) ;
un deuxième module de commande (140) configuré pour communiquer avec une section de tuyau en aval (18) ;
une conduite d'écoulement (146).

13. Ensemble (10 ; 1010 ; 2010) selon la revendication 12 lorsqu'elle dépend de la revendication 11, dans lequel le dispositif d'étanchéité (32, 34) de l'ensemble d'outils d'isolation (14 ; 1014A ; 1014B ; 2014A ; 2014B) comprend un anneau (40), et dans lequel au moins l'un du premier module de commande (138) et du deuxième module (140) sont configurés pour communiquer avec l'anneau (40).

14. Ensemble (10 ; 1010 ; 2010) selon l'une quelconque des revendications 9 à 13, comprenant un accumulateur (148 ; 1148 ; 2148A ; 2148B) pour appliquer la pression test (Pt) dans le tuyau (12 ; 1012 ; 2012).
